(19) **Europäisches Patentamt**

**European Patent Office**

**Office européen des brevets**

(11) **EP 1 465 759 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(21) Anmeldenummer: **03729434.5**

(22) Anmeldetag: **09.01.2003**

(51) Int Cl.:
*B29C 45/00* *(2006.01)*   *B29C 45/26* *(2006.01)*
*B29C 45/34* *(2006.01)*   *B29C 45/16* *(2006.01)*

(86) Internationale Anmeldenummer:
**PCT/EP2003/000131**

(87) Internationale Veröffentlichungsnummer:
**WO 2003/059594 (24.07.2003 Gazette 2003/30)**

(54) **VERFAHREN UND VORRICHTUNG ZUR HERSTELLUNG VON BORSTEN**

METHOD AND DEVICE OF THE PRODUCTION OF BRUSHES

PROCEDE ET DISPOSITIF POUR PRODUIRE DES BROSSES

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**LT LV MK RO**

(30) Priorität: **17.01.2002 DE 10201635**

(43) Veröffentlichungstag der Anmeldung:
**13.10.2004 Patentblatt 2004/42**

(73) Patentinhaber: **GEKA BRUSH GMBH**
**91572 Bechhofen-Waizendorf (DE)**

(72) Erfinder: **WEIHRAUCH, Georg**
**69483 Wald-Michelbach (DE)**

(74) Vertreter: **Schneck, Herbert et al**
**Rau, Schneck & Hübner**
**Patentanwälte**
**Königstrasse 2**
**90402 Nürnberg (DE)**

(56) Entgegenhaltungen:
**WO-A-02/03831**      **WO-A-94/13461**

- **PATENT ABSTRACTS OF JAPAN vol. 12, no. 18 (M-660), 20. Januar 1988 (1988-01-20) -& JP 62 178315 A (MITSUBISHI CABLE IND LTD), 5. August 1987 (1987-08-05)**
- **PATENT ABSTRACTS OF JAPAN vol. 16, no. 82 (M-1215), 27. Februar 1992 (1992-02-27) -& JP 03 266632 A (YASUNAGA KUWABARA), 27. November 1991 (1991-11-27)**

**Beschreibung**

Die Erfindung betrifft ein Verfahren zur Herstellung einer Borste aus thermoplastischen Polymeren im Wege des Spritzgießens gemäß dem Oberbegriff des Anspruchs 1. Die Erfindung betrifft ferner eine Vorrichtung zur Durchführung des Verfahrens gemäß dem Oberbegriff des Anspruchs 31.

Bei der Herstellung von Bürsten, Pinseln oder dergleichen sind die früher als Borstenmaterial verwendeten Tierhaare und Naturfasern überwiegend durch Kunststoffborsten ersetzt worden, wobei die Herstellung des Borstenmaterials weitgehend auf die schon frühzeitig praktizierte Herstellung synthetischer Textilfasern zurückgeht, d.h. auf Extrusions- oder Spinnprozesse. Eine Borste unterliegt allerdings völlig anderen Anforderungen als eine Endlosfaser in einem Faserverbund. Sie ist freistehend und nur einseitig befestigt und festigkeitstheoretisch als einseitig eingespannter Biegebalken zu verstehen. Im Gebrauch kommen Druck- oder Stauchkräfte, gelegentlich auch Zugkräfte hinzu. Hieraus ergeben sich gegenüber Endlosfasern andere Fertigkeitsanforderungen hinsichtlich der Biegefestigkeit, Biegewechselfestigkeit, Knickfestigkeit und des Wiederaufrichtvermögens (bend-recovery).

Monofile für Borsten werden deshalb mit einem relativ großen Durchmesser bis zu einigen Millimetern extrudiert. Durch die Formgebung der Extrusions- bzw. Spinndüse läßt sich in der Polymerschmelze eine gewisse Längsorientierung der Moleküle erreichen, die allerdings nicht ausreicht, um dem Monofil die gewünschten Eigenschaften zu geben. Das Monofil wird deshalb verstreckt, also unter entsprechenden Abzugskräften gedehnt. Dabei ist in der Regel ein Vorverstrecken und ein Nachverstrecken und anschließend ein gegebenenfalls wiederholtes thermisches Stabilisieren erforderlich. Das Endlosmonofil wird anschließend aufgespult und die gespulte Ware gegebenenfalls nochmals stabilisiert.

Werden die Endlosmonofile in der Bürstenfertigung nicht unmittelbar von der Spule verarbeitet - dies ist bis heute noch die Ausnahme - wird eine große Zahl von Monofilen zu Strängen zusammengeführt, eingebunden und auf handhabbare Längen zwischen 60 bis 120cm abgelängt. Aus dem Strangmaterial wiederum werden Kurzschnitte durch Schneiden hergestellt, deren Länge etwas größer als die der endgültigen Borsten ist. Dabei entsteht ein Abfall von ca. 30% des Ausgangsmaterials. Bei hochwertigen Kunststoffborsten, z.B. aus Polyamiden (Nylon), wie sie für Qualitätsbürsten, z.B. Zahnbürsten, Hygienebürsten etc. benötigt werden, stellt der Rohstoffpreis den größten Kostenfaktor am Borstenpreis dar. Der Preis extrudierter Borsten wird folglich durch den hohen Abfall erheblich belastet.

An die Borstenfertigung schließt sich in der Bürstenfertigung die Befestigung der Borsten am Borstenträger an. Dies kann mechanisch oder thermisch geschehen. Da die freie Länge der Borsten in diesem Zwischenstadium stark schwankt, schließt sich ein Abscheren und zumeist ein Nachbearbeiten der Borsten und vor allem der Borstenenden an, um die scharfen Schnittkanten zu beseitigen. Soweit die von den freien Enden gebildete wirksame Bürstfläche besonderen Anforderungen genügen muß, z.B. bei Zahnbürsten, muß schon bei der Befestigung oder anschließend daran die an sich ebene Bürstfläche konturiert werden. Hierbei entsteht nochmals ein Abfall von ca. 10%.

Unter Berücksichtigung der Tatsache, daß ca. 90% des weltweiten Bedarfs an Borsten sich auf Borstenlängen < 10cm beschränkt, ist die Endlosherstellung durch Spinnen mit allen anschließenden Arbeitsgängen bis zur fertigen Borste allein aufgrund des Rohstoffabfalls in höchstem Maß unwirtschaftlich. Weitere Beschränkungen ergeben sich aus der Tatsache, daß Monofile in der Regel nur in zylindrischer Form, wenn auch im Querschnitt profiliert, hergestellt werden können, so daß auch die Bauform der Borsten beschränkt ist und gegebenenfalls aufwendige Nachbearbeitungen erforderlich sind.

Auf der anderen Seite hat sich in der Bürsten- und Pinselindustrie das Spritzgießen für die Herstellung von Bürstenkörpern, Bürstengriffen, Pinselgriffen etc. aus Kunststoff sehr früh durchgesetzt, um die vielfältigen Gestaltungsmöglichkeiten in der Spritzgießtechnik zu nutzen. In deren Folge hat es auch nicht an Versuchen gefehlt, den Bürstenkörper zusammen mit den Borsten einstückig im Spritzgießverfahren herzustellen. Diese Verfahren werden nur bei Bürsten mit geringsten Qualitäts- und Stabilitätsanforderungen, insbesondere solchen, die nur einmal oder einige wenige Male benutzt werden, praktisch genutzt. Gespritzte Borsten haben eine ungleich schlechtere Biegefestigkeit, Biegewechselfestigkeit und Knickfestigkeit, ein mangelhaftes Wiederaufrichtvermögen und geringe Verschleißfestigkeit. Gespritzte Bürsten haben verfahrensbedingt stark konische Borsten mit relativ großen Querschnitten im Wurzelbereich der Borste und sind deshalb eher als Stifte oder Bolzen, denn als Borsten zu bezeichnen. Nachfolgend wird auf einige bekannte Spritzgießverfahren in der Bürstentechnik eingegangen.

Technische Rotationsbürsten zum Schleifen und Polieren von Oberflächen sind aus scheibenförmigen Bürstensegmenten zusammengesetzt, die einzeln durch Spritzgießen hergestellt werden sollen (US 5,903,951). Jedes Bürstensegment weist eine zentrale Trägerscheibe auf, von der sich die Borsten radial oder unter einem entgegen der Drehrichtung geneigten Winkel zur Radialen nach außen erstrecken. Die Bürstensegmente bestehen aus einem thermoplastischen oder thermoelastischen Polymer (TP oder TPE), das mit abrasiven Partikeln gefüllt ist. Die Borsten sollen vorzugsweise eine Länge zwischen 1cm und 5cm und einen Durchmesser zwischen 0,25mm und 10mm, vorzugsweise zwischen 1mm und 2mm aufweisen. Bei einem konkreten Ausführungsbeispiel sind die konischen Borsten 75mm lang und ihr Durchmesser beträgt 2mm an der Wurzel und 1,5mm an der Spitze. Die zweiteilige Spritzgießform besteht aus zwei Platten, die auf den einander zugekehrten Seiten, die zugleich die Formtrennebene bilden, die Kavitäten für die Trägerscheibe und die Borsten aufweisen. Die Polymerschmelze mit den eingemischten Abrasivpartikeln wird mit einem Spritzdruck von 690 bis 6900 kPa (0,59 bis 69 bar) vom Zentrum der Trägerscheibe eingespritzt. Als bevorzugter Druckbereich sind 2070 bis 4830 kPa genannt. Die zwingend erforderliche Entlüftung der Formkavität erfolgt in der Formtrennebene, also borstenparallel. Dies führt zwangsläufig zu zwei Formtrennähten auf dem Borstenmantel, die von der Wurzel bis zur Spitze und über diese hinweglaufen. Da die Abrasivpartikel die kleinen Querschnitte in den Borstenkavitäten zusätzlich verengen und die Polymerschmelze an diesen Stellen zu schnell erstarrt, ohne die Borstenkavität auszufüllen, wird ein zweistufiges Spritzgießen vorgeschlagen, indem zunächst eine hoch gefüllte Polymerschmelze in die Borstenkavitäten und anschließend eine weniger oder nicht gefüllte Polymerschmelze nachgespritzt wird. Dem Fachmann ist bekannt, daß beim Spritzgießen praktisch keine Molekülorientierung im Polymer stattfindet (US 2001/0007161 A1, siehe Spalte 1, Absatz 0006). Dies führt bei Borsten zu einem völlig unzureichenden Biegeverhalten, das durch die beigemischten Abrasivpartikel noch verschlechtert wird. Der angegebene maximale Spritzdruck von 6900 kPa (69 bar) wird aufgrund des Strömungswiderstandes in der engen Formkavität für die Ausbildung der Trägerscheibe und in den anschließenden Borstenkanälen so stark abgebaut, daß für den Fachmann begründete Zweifel an der praktischen Durchführbarkeit dieses Verfahrens bestehen.

Die US 3,618,154 beschreibt die Herstellung einer Zahnbürste in einem einzigen Spritzgießvorgang, wobei die Borsten am Bürstenkopf in einer Art Bündelanordnung gespritzt werden. Zu diesem Zweck weist das zweiteilige Spritzgießwerkzeug, dessen Formtrennebene in der Ebene des Bürstenkopfs liegt, im wesentlichen zylindrische Bohrungen auf, die von der die Borstenseite des Bürstenkopfs bildenden Formfläche ausgehen. In die Bohrungen greifen von der gegenüberliegenden Seite im wesentlichen zylindrische Formkerne ein, die mit ihrer einen Stirnseite einen Teil der Formfläche für die Borstenträgerseite des Kopfs bilden und - von dieser ausgehend - entlang Mantellinien verlaufende, rinnenartige Vertiefungen aufweisen. Diese rinnenartigen Vertiefungen verjüngen sich von der stirnseitigen Formfläche zum anderen Ende gleichmäßig konisch und enden in einer halbkugelförmigen Kalotte auf dem Mantel des Formkerns, auf dem die Vertiefungen gleichmäßig verteilt angeordnet sind. Jede Vertiefung bildet zusammen mit der Wandung der Bohrung in dem einen Teil der Spritzgießform einen borstenformenden Kanal, der sich folglich von der Formkavität für den Bürstenkopf zum anderen Ende konisch verjüngt. Die Entlüftung der Kanäle erfolgt über deren gesamte Länge in der Trennfläche zwischen Formkern und Bohrung, also im wesentlichen borstenparallel. Hierfür fordert die US 3,618,154 eine hohe Präzision der zusammenwirkenden Flächen. Auch hier kommt es an jeder Borste zwangsläufig zu zwei Formtrennähten, die entlang Mantellinien der Borste verlaufen. Auch lassen sich keine Borsten mit kreisrundem Querschnitt herstellen, da die rinnenartige Vertiefung im Formkern einen wesentlich größeren Krümmungsradius als die Bohrung besitzt. Dadurch entsteht eine Querschnittsform mit Diskontinuitäten, an denen sich zugleich die Formtrennnähte ausbilden, die sich nachträglich nicht mehr entfernen lassen. Die Borste weist zudem in verschiedenen Richtungen quer zu ihrer Achse unterschiedliches Biegeverhalten auf. Auch ergeben sich keine vollen Bündel, sondern ist deren Zentrum frei, so daß sich die Borsten auch nicht gegeneinander abstützen können, wie dies bei herkömmlichen Bündeln der Fall ist. Das gravierende Problem des Entformens der einzelnen Borsten soll einerseits durch eine entsprechende Konizität der borstenformenden Rinnen gelöst werden. Dies gelingt offensichtlich nicht, weil die Formkerne zugleich noch als Auswerferstifte eingesetzt werden, indem sie beim Entformen über die kalottenförmigen Enden der rinnenartigen Vertiefungen auf die Borstenspitzen schiebend einwirken. Die Konizität soll bei Gebrauch der Zahnbürste für relativ flexible Borstenenden sorgen. Auch diese Druckschrift beschreibt keine über die übliche Spritzgießtechnik hinausgehenden Maßnahmen, die zu einer Verbesserung des Biegeverhaltens der spritzgegossenen Borsten führen könnten, so daß auch hier die Polymermoleküle in der beim Spritzgießen üblichen energetisch günstigsten, stabilitätsmäßig jedoch ungünstigen Knäuelform vorliegen (US 2001/ 0007161 A1).

Es ist ferner bei der Herstellung von Zahnbürsten bekannt (US 5,158,342) auf einen vorgespritzten Bürstenkörper, bestehend aus Griff und Bürstenkopf, in eine vorbereitete Vertiefung des Bürstenkopfs den Borstenbesatz nachträglich aufzuspritzen. Dies führt zu Borsten mit völlig unzulänglichem Biegeverhalten aufgrund der herkömmlichen Spritzgießtechnik mit Spritzdrucken von 30 bis 60 bar (3000 bis 6000 kPa).

Eine zweistufige Herstellung von Borstenbesatz und Borstenträger beschreibt auch die GB 2 151 971. In dieser Druckschrift ist insbesondere das Problem des Entformens der Borsten aus den borstenformenden Kanälen erkannt worden. Trotz einer das Entformen begünstigenden starken Konizität der Borsten wird zusätzlich ein extrem verzögerter und gesteuerter Zeitablauf für das Entformen vorgesehen, der die Leistung der Spritzgießanlage reduziert. Spritzgießtechnische Maßnahmen zur Erhöhung der Borstenstabilität sind nicht beschrieben.

Weit bessere Ergebnisse werden nach einer älteren, nicht vorveröffentlichten Patentanmeldung des Erfinders erzielt (PCT/EP01/07439), bei dem ein Borstenträger mit Bohrungen versehen wird, die einen düsenartigen Querschnittsverlauf aufweisen. Die Polymerschmelze für die Borsten wird durch die düsenartigen Bohrungen in daran anschließende Formkanäle einer Spritzgießform gespritzt. Mit diesem Verfahren wird ein Halbfabrikat aus Borstenträger und Borsten oder auch - bei entsprechender Formgebung des Borstenträgers - eine fertige Bürste hergestellt, bei dem die Borsten hinsichtlich ihres Biegeverhaltens ähnlich gute Werte wie extrudierte Borsten zeigen, die Formgebung der Borsten aber nicht den Zwängen unterliegt, die sich aus der Endlosfertigung von extrudierten Monofilen ergeben.

Es ist weiterhin bekannt (US 4,712,936), kleine Auftragspinsel, z.B. für dekorative Kosmetika, die in ein Behältnis eingetaucht sind und an der Verschlußkappe für dieses Behältnis befestigt sind, als einteiliges Spritzgußteil herzustellen, das aus der Kappe, einem an deren Innenseite zentrisch ansetzenden Schaft und an dessen Ende angeordneten Pinselborsten besteht. Die Formkavitäten für die Kappe, den zentrischen Schaft und die anschließenden borstenformenden Kanäle sind axial ausgerichtet in den zwei Teilen eines Spritzgießwerkzeugs ausgebildet, in deren Formtrennebene die Kappenöffnung liegt. Schaft und Borsten werden durch koaxial ineinander geschobene Formkerne erzeugt. Die Anspritzseite befindet sich an der Kappe. Die Polymerschmelze muß folglich lange Strömungswege mit mehreren Querschnittsänderungen und großen Massebedarf überwinden, bevor sie in die dünnen Borstenkanäle gelangt. Die gesamte Entlüftung des Schaft- und Borstenbereichs erfolgt an den Enden der Borstenkanäle über einen zylindrischen Verschluß mit Rändelstruktur, die eine Art Filter mit hohem Strömungswiderstand bilden soll. Bei diesem Stand der Technik ist erkannt worden, daß die durch Spritzgießen erzeugbaren Borsten insbesondere für den Einsatz als Pinsel nicht geeignet sind. Sie werden deshalb nach dem Entformen außerhalb der Spritzgießform erneut erwärmt und anschließend verstreckt. Dabei geht es insbesondere um eine Querschnittsreduzierung, die zwangsläufig zu einer Vergrößerung des Abstandes zwischen den Borsten führt. Bei Auftragspinseln dieser Art sollen die Borsten aber in möglichst geringem Abstand angeordnet sein, um zwischen den Borsten eine Kapillarwirkung zum Speichern und Zurückhalten des Auftragsmediums zu erzeugen.

Es ist ferner versucht worden (DE 21 55 888 C3), eine Bürste mit angeformten Borsten durch Spritzgießen derart herzustellen, daß das Spritzgießwerkzeug aus einem ersten Werkzeugteil für den Borstenträger und einem die offene Formkavität weitgehend abdeckenden zweiten Werkzeugteil besteht, in welchem ein kurzer Kanal ausgebildet ist, der sich an seinem gegenüberliegenden Ende erweitert und dort verschlossen ist. Beim Abspritzen dringt die Polymerschmelze aus der Formkavität des Trägers in den kurzen Kanal ein und fließt in die Erweiterung hinein, so daß sich ein kurzer Bolzen mit einem Kopf bildet. Beim Öffnen der Form wird der Kopf mitgenommen und der bolzenartige Borstenrohling gestreckt. Damit kann - ähnlich wie bei der Endlosherstellung von Monofilen - eine gewisse Moleküleorientierung erfolgen, die stabilitätsfördernd wirkt.

Der Versuch, die Produktion der Borsten aus extrudierten Endlosmonofilen und deren Befestigung an gesondert gefertigten Bürstenkörpern zu Gunsten des Spritzgießens der kompletten Bürste mit den Borsten zu ersetzen, muß als gescheitert angesehen werden (US 2001/0007161 A1).

Dies gilt auch für den bekannten Vorschlag, nur die Borste im Wege des Spritzgießens herzustellen (US 3,256, 545). Dieser nächstkommende Stand der Technik geht davon aus, daß extrudierte Borsten durch Nachbearbeitung der Borstenenden, wie auch durch Spritzgießen einstückiger Bürsten erhaltene Borsten zwar wegen der spritzgießtechnisch notwendigen Konizität Enden mit erhöhter Flexibilität aufweisen, dies aber auf Kosten der Abrieb- und Verschleißfestigkeit geht. Die zu den Enden hin abnehmende Verschleißfestigkeit soll bei dem vorgeschlagenen Verfahren dadurch behoben werden, daß der Querschnitt der gespritzten Borste sich von dem die Anspritzseite bildenden befestigungsseitigen Ende (Borstenwurzel) zum freien Ende hin vergrößert. Der Querschnittsverlauf kann kontinuierlich oder diskontinuierlich sein mit der Folge, daß im Bereich der Arbeitsenden der Borsten eine größere Kunststoffmasse vorhanden ist als am befestigungsseitigen Ende. Die ungenügenden Eigenschaften bekannter konischer Borsten werden also durch Anhäufung einer größeren Kunststoffmasse im Bereich der Borstenenden ausgeglichen. Dabei wird jedoch verkannt, daß mit zunehmender Kunststoffmasse bzw. zunehmendem Querschnitt der Anteil der energetisch günstigen Knäuelstruktur zunimmt, die Borste also durch ihre Querschnittsvergrößerung überproportional an Biegeelastizität verliert. Bei diesem Spritzgießverfahren werden Spritzdrucke von 800 bis 1200 bar (ca. $0{,}8 \cdot 10^5$ bis $1{,}2 \cdot 10^5$ kPa) vorgeschlagen, die deshalb notwendig sind, um die Polymerschmelze durch die anspritzseitig zunächst engeren Kanäle bis in die erweiterten Kanäle formfüllend einbringen zu können. Trotz des relativ hohen Drucks werden bei den empfohlenen Borstendurchmessern zwischen 1,6 und 2,2mm im Bereich des dünneren und zwischen 11 und 12mm im Bereich des dickeren Querschnitts unorientierte Molekülstrukturen angestrebt (Spalte 5, Zeilen 43 bis 48 und Spalte , Zeilen 32 bis 42). Für die Befestigung der spritzgegossenen Borsten an einem Borstenträger werden an der Anspritzseite der Borsten Tragstrukturen aus derselben Polymerschmelze ausgebildet, die gegebenenfalls auch mehrere Borsten miteinander verbinden.

Es ist schließlich aus der Fachliteratur bekannt (Ehrenstein: Eigenverstärkung von Thermoplasten im Schmelze-Deformationsprozeß in DE-Zeitschrift "Die Angewandte Makromolekulare Chemie" 175 (1990), Seite 187 bis 203), daß die theoretischen mechanischen Werte des Elastizitätsmoduls $[N/mm^2]$ und der Zugfestigkeit $[N/mm^2]$ durch Extrusions- und Spritzgießverfahren bei Polyamiden nur zu 3% bzw. 6% und bei Polyethylen zu 33% bzw. 5,5% erreicht werden, wobei man bei spritzgegossenen Bauteilen den spannungsfreien Zustand (Knäuelstruktur der Moleküle) bevorzugt.

Im Oberbegriff der Patentansprüche 1 und 31 wird von einem Stand der Technik für ein Verfahren bzw. eine Vorrichtung zur Herstellung einer Borste aus thermoplastischem Polymer mittels Spritzgießens ausgegangen, wie er aus der WO-A-94/13461 bekannt ist. Dabei ist vorgesehen, eine Polymerschmelze unter Druck in eine Spritzgießform einzubringen, die mehrteilig aufgebaut ist und mehrere borstenformende Kanäle aufweist. Während des Einbringens der Polymerschmelze entweicht die Luft aus den Kanälen durch die Trennfügen der Spritzgießformteile. Dabei stellt sich infolge der Reibung der Polymerschmelze an der Wandung des Kanals zwangsläufig in der Polymerschmelze über den Strömungsquerschnitt ein Geschwindigkeitsprofil ein, das eine höhere Kerngeschwindigkeit im Zentrum des Querschnitts der strömenden Polymerschmelze und eine geringere Randgeschwindigkeit an der Wandung des Kanals umfasst, wodurch es im wandungsnahen Bereich der Polymerschmelze zu einer Längsorientierung der Polymermoleküle kommt, Während sich unmittelbar an der Wandung des Kanals eine ausgeprägte Längsorientierung der Polymermoleküle einstellt, bleibt im Kernbereich eine ungerichtete Anordnung der Moleküle erhalten. Die führt nicht nur dazu, dass die Borste nicht die für den Einsatz in einer Bürste notwendige Stabilität (Biegefestigkeit, Knickstabilität und Wieder-Aufrichtvermägen) besitzt, sondern die Stabilitätseigenschaften der Borste lassen sich auch nicht mit hoher Genauigkeit reprodzuieren, da nicht vorhersehbar ist, welcher Anteil der Polymermoleküle eine Längsorientierung erhält und in welchem Maße der Kernbereich der Borste zu deren Stabilität beiträgt.

Der Erfindung liegt die Aufgabe zugrunde, ein verfahren zur Herstellung einer Borste aus thermoplastischen Polymeren im Wege des Spritzgießens zu schaffen, mit dem sich Borsten hoher Stabilität in reproduzierbarer Weise herstellen lassen. Ferner liegt der Erfindung die Aufgabe zugrunde, eine zur Durchführung des Verfahrens geeignete Vorrichtung vorzuschlagen.

Dieser Aufgabe wird hinsichtlich des Verfahrens erfindungsgemäß durch die kennzeichnenden Merkmale des Anspruchs 1 gelöst- Dabei ist vorgesehen, daß die Höhe des Spritzdrucks in Abhängigkeit von dem Querschnittsverlauf des borstenformenden Kanals so eingestellt wird, daß eine Scherströmung mit einer hohen Kerngeschwindigkeit im Zentrum der strömenden Polymerschmelze und großer Scherwirkung aufgrund der Wandreibung der Polymerschmelze unter ausgeprägter Längsorientierung der Polymermoleküle wenigstens im wandnahen Bereich der Polymerschmelze erzeugt und auf der Länge des Kanals aufrechterhalten wird, wobei zugleich der Kanal auf seiner Länge so entlüftet wird, daß die Aufrechterhaltung der Scherströmung unterstützt wird.

Die Erfindung geht von der Erkenntnis aus, daß sich das Biegeverhalten eines Monofils in erster Linie durch die Erzeugung und Aufrechterhaltung einer Molekülorientierung steigern läßt, die beim Spritzgießen von Borsten, Bürsten und Pinseln bisher nicht verwirklicht worden ist. Die Molekularstruktur in einer strömenden Polymerschmelze läßt sich merklich nur bei ausreichend engen Querschnitten und nur dadurch beeinflussen, daß der Schmelzeströmung ein Geschwindigkeitsprofil mit starker Scherwirkung aufgezwungen wird, um die an sich energetisch günstigste, spannungsfreie Knäuelstruktur zu deformieren und zu strecken. Es wird deshalb erfindungsgemäß der Spritzdruck so hoch gewählt, daß sich in den borstenformenden Kanälen ein steiles Strömungsprofil ausbildet, das sich durch eine hohe Kerngeschwindigkeit im Zentrum der Strömung und große Scherwirkung im Randbereich derselben aufgrund der Wandreibung der Polymerschmelze an der Kanalwandung auszeichnet, wobei die Scherkräfte aufgrund der Wandreibung umso größer sind, je höher die Differenzgeschwindigkeit benachbarter Strömungsschichten ist. Ein solches Strömungsprofil mit hoher Kerngeschwindigkeit gewährleistet ferner eine einwandfreie Formfüllung des borstenformenden Kanals auch bei engsten Querschnitten (kleiner Borstendurchmesser) und großer Länge des Kanals (Borstenlänge).

Das Geschwindigkeitsprofil läßt sich in Abhängigkeit von dem über die Länge des borstenformenden Kanals vorgegebenen Querschnittsverlauf durch einen entsprechend hohen, gegebenenfalls auch variablen Spritzdruck einstellen. Dadurch wird eine Längsorientierung der Polymermoleküle nahe der Kanalwandung und mit abnehmender Ausprägung innerhalb des gesamten Schmelzestroms erreicht, wobei die Höhe der Kerngeschwindigkeit ferner ein zu frühes Erstarren der Schmelze auch bei kleinen Querschnitten und großer Länge verhindert.

Ein hoher Druck allein reicht jedoch nicht aus, um einen engen Formkanal schnell zu füllen. Es wird deshalb erfindungsgemäß der Kanal auf seiner Länge so entlüftet, daß die Aufrechterhaltung der Scherströmung mit hoher Fließgeschwindigkeit bis in das Ende des Kanals unterstützt wird, so daß die angestrebte Längsorientierung der Moleküle bis in die Borstenspitze reicht.

Der Spritzdruck beträgt in Abhängigkeit vom Querschnittsverlauf des borstenformenden Kanals wenigstens 500 bar ($0,5 \cdot 10^5$ kPa). Für die hier in Rede stehenden Qualitätsborsten mit einem mittleren Borstendurchmesser von z.B. 0,3 (gemessen auf der halben Länge), also einem entsprechenden Querschnitt des borstenformenden Kanals und einer Länge von 10,5mm läßt sich das gewünschte Geschwindigkeitsprofil mit einem Spritzdruck von größer 500 ($0,5 \cdot 10^5$ kPa) erzeugen. Der vorgenannte Spritzdruck läßt sich in der Regel zu etwa 2/3 als spezifischer Druck im borstenformenden Kanal umsetzen, so daß die Polymerschmelze in dem Kanal einen Druck > 300 bar ($0,3 \cdot 10^5$ kPa) aufweisen sollte.

Bei Anwendung des erfindungsgemäßen Verfahrens wird ferner das Verhältnis der größten Weite zur Länge des Kanals von ≤ 1:10, vorzugsweise bis ≤ 1:250 gewählt. Es lassen sich z.B. Borsten herstellen, die bei einem maximalen Durchmesser von 3mm im oder nahe dem Wurzelbereich eine Länge zwischen 15mm und 750mm aufweisen. Je kleiner die größte Weite ist, umso kürzer wird man die Länge wählen. Für hohe Anforderungen, beispielsweise bei Zahnbürsten, Auftragspinseln etc. empfehlen sich Durchmesser oberhalb des Wurzelbereichs von ≤ 0,5mm, die bei dem erfindungsgemäßen Verfahren Borstenlängen bis über 60mm zulassen.

Thermoplastische Kunststoffe bilden bei der Erstarrung unterhalb der Kristallschmelztemperatur Kristallite, die je nach Form und Ordnung den Elastizitätsmodul (E-Modul) und die Zugfestigkeit (Zerreißfestigkeit) beeinflussen. Einen positiven Einfluß im Sinne einer Versteifung durch Erhöhung des E-Moduls und eine Verfestigung im Sinne der Erhöhung der Zugfestigkeit läßt sich durch Bildung von Nadelkristallen erreichen, die zunächst eine gestreckt kettige Kristallkeimbildung an parallel liegenden Molekülabschnitten voraussetzen. Diese Keimbildung läßt sich gegenüber einer isothermen Kristallisation durch Spannungsinduzierung, wie sie u.a. bei Fließvorgängen gegeben ist, um ein Vielfaches steigern. Der erfindungsgemäß vorgesehene hohe Spritzdruck und die dadurch erzielte hohe Fließgeschwindigkeit der Polymerschmelze im borstenformenden Kanal fördert somit nicht nur die molekulare Längsorientierung sondern auch die Kristallbildung, wobei der hohe Druck als weitere Spannungsinduzierung zugleich die Packungsdichte der Kristalle erhöht. Durch die teilweise Kristallisation der molekularorientierten Schmelze erhöht sich die Relaxationszeit, d.h. die Molekülorientierung bleibt länger aufrechterhalten.

Die zuvor beschriebenen Effekte werden in Fortführung der Erfindung noch dadurch unterstützt, daß der borstenformende Kanal gekühlt wird.

Je enger der Querschnitt und je größer die Länge des borstenformenden Kanals ist, würde man eher ein Warmhalten der Kanalwände erwägen, um die Viskosität der Polymerschmelze zu erhalten und eine vollständige Formfüllung zu erreichen. Diese Formfüllung ist jedoch bei Einstellung der erfindungsgemäßen Verfahrensparameter auch bei Kühlung des borstenformenden Kanals gewährleistet. Durch die Kühlung des Kanals und die damit verbundene Spannungsinduzierung wird die Kristallbildung zusätzlich gefördert und die Relaxationszeit erhöht. Die an der Kanalwandung entstehende stabilisierende Außenschicht der Borste ermöglicht eine Erhöhung des beim Spritzgießen üblichen Nachdrucks. Je höher der Nachdruck, umso stärker wird die Kristallkeimbildung im noch schmelzflüssigen Kern der Borste gefördert. Durch den Druck wird zugleich die Schmelztemperatur erhöht und somit bei gegebener Massetemperatur die Schmelze stärker unterkühlt, wodurch weiterhin die Kristallwachstumsgeschwindigkeit positiv beeinflußt und die Relaxation der Moleküle erschwert wird.

Der hohe Spritzdruck und die hohe Fließgeschwindigkeit erfordern besondere oder zusätzliche Maßnahmen für eine schnelle und effektive Entlüftung, um eine vollständige Formfüllung zu gewährleisten und Kavitationen am Formkanal oder Lufteinschlüsse in der Schmelze zu vermeiden. Bei den Spritzgießverfahren nach dem Stand der Technik erfolgt die Entlüftung des borstenformenden Kanals bei einer vollständig geschlossenen Kavität über das Ende des Kanals oder aber bei einer längsgeteilten Spritzgießform für den Kanal in zwei borstenparallelen Ebenen. Im erstgenannten Fall ist zur Ausbildung eines einwandfreien, vorzugsweise abgerundeten Borstenendes eine starke Drosselung der Entlüftung notwendig, um den Übertritt von Polymerschmelze in die Entlüftungsquerschnitte zu vermeiden. Bei borstenparalleler Entlüftung liegt die Formtrennebene in Strömungsrichtung mit der Folge, daß die Polymerschmelze auch in engste Entlüftungsspalte eindringt und zur Bildung von Formtrennähten entlang des Borstenmantels führt.

Erfindungsgemäß ist deshalb vorgesehen, daß der borstenformende Kanal quer zur Strömungsrichtung der Polymerschmelze entlüftet wird, wobei die Entlüftung vorzugsweise in mehreren quer zur Strömungsrichtung der Polymerschmelze liegenden Ebenen erfolgt. Die Anzahl der Entlüftungsebenen wird umso größer gewählt, je länger der borstenformende Kanal ist, so daß bei einer vorgegebenen Kanallänge die Entlüftung in Abhängigkeit von der Geschwindigkeit der Schmelzefront gleichsam gesteuert erfolgt. Da die Entlüftung in einer solchen Ebene über den gesamten Umfang des Borstenkanals erfolgen kann, steht eine entsprechend große Spaltlänge zur Verfügung, die bei mehreren Ebenen quer zur Strömungsrichtung größer sein kann als bei einer borstenparallelen Formtrennebene.

Die Entlüftungsebenen können über die Länge des borstenformenden Kanals abstandsgleich, je nach zu entlüftendem Volumen auch mit progressivem oder degressivem Abstand in

Strömungsrichtung der Polymerschmelze vorgesehen werden. Damit ist zugleich die Aufrechterhaltung eines ausreichend hohen Gegendrucks im Kanal möglich, um eine gleichmäßige Formfüllung zu erhalten.

Der borstenformende Kanal kann allein durch Verdrängen der Luft mittels des Strömungsdrucks der Polymerschmelze entlüftet werden, doch kann die Entlüftung auch durch einen äußeren Unterdruck unterstützt werden.

Das erfindungsgemäße Verfahren gibt die Möglichkeit, die Polymerschmelze in einen borstenformenden Kanal mit einem von der Anspritzseite aus im wesentlichen gleichbleibenden Querschnitt zu spritzen, so daß eine im wesentlichen zylindrische Borste erhalten wird, die mit der bisher bei Borsten und Bürsten angewandten Spritzgießtechnik nicht zu erzeugen war.

Es kann aber auch ein sich von der Anspritzseite im wesentlichen kontinuierlich verjüngender Querschnitt vorgesehen werden, so daß eine Borste mit vorzugsweise nur schwacher Konizität erhalten wird, die in vielen Anwendungsfällen erwünscht ist, um die Biegeelastizität von der Borstenwurzel zum Borstenende zu erhöhen. Eine solche Konizität fördert auch die Aufrechterhaltung oder gar Verstärkung eines steilen Geschwindigkeitsprofils mit hoher Kerngeschwindigkeit und über die Länge größer werdender Scherwirkung im Randbereich, so daß trotz erhöhten Strömungswiderstandes die Molekülorientierung und Kristallbildung zum Borstenende hin noch gefördert wird.

Durch das Spritzgießen lassen sich maßhaltige Borsten mit einer Toleranz von ±3% im Querschnitt und in der Länge herstellen, während extrudierte Borsten bei den gleichen konstruktiven Parametern Toleranzen von ±10% aufweisen. Hinzu kommt bei extrudierten Borsten eine verfahrensbedingte Ovalisierung des zunächst kreisrunden Querschnitts, was bei den erfindungsgemäß hergestellten Borsten vermieden wird.

In der Spritzgießtechnik werden üblicherweise Entformungsschrägen von einigen Grad (>1,00°) als notwendig erachtet, um das Spritzgußteil einwandfrei entformen zu können. Das Entformen muß in der Regel durch Auswerfer unterstützt werden. Beim Spritzgießen von Borsten nach dem eingangs geschilderten Stand der Technik muß die Formschräge wesentlich höher gewählt werden, um ein Abreißen der Borste beim Entformen zu verhindern (US 3 256 545). Nicht zuletzt aus diesem Grunde greift der Stand der Technik zu Spritzgießwerkzeugen mit borstenparalleler Formtrennebene unter Inkaufnahme der beschriebenen Nachteile. Das erfindungsgemäße Verfahren ermöglicht eine Reduzierung der Formschräge bis auf den wert 0° bei gleichwohl ausreichender Formfüllung. Es lassen sich also schlanke Borsten großer Länge mit relativ geringer Konizität im Bereich von 0,2 bis 0,5° herstellen, wenn die positiven Eigenschaften einer konischen Borste mit einem progressiven Biegewinkel zum Borstenende hin erwünscht sind. Aufgzund der durch die Längsorientierung und verstärkten Kristallbildung und der hiermit einhergehenden Erhöhung der Zugfestigkeit (Zerreißfestigkeit) der Borste, insbesondere in dem für das Entformen bedeutsamen wandnahen Bereich, läßt sie sich auch gut entformen. Weitere Maßnahmen zur Erleichterung des Entformens sind im Zusammenhang mit der Vorrichtung beschrieben.

In einer weiteren Ausführung des erfindungsgemäßen Verfahrens wird die Polymerschmelze in einen sich zum borstenformenden Kanal düsenartig verengenden Einlaufbereich zur Erzeugung einer Dehnströmung gespritzt, um eine Borste mit einem verbreiterten Wurzelbereich mit sich gegebenenfalls kontinuierlich zur eigentlichen Borste verjüngender Kontur zu erhalten.

Durch eine solche Verengung wird eine Dehnströmung erzeugt, die in erheblichem Maße zur Molekülorientierung und aus strömungstechnischen Gründen zu einer entsprechenden Überhöhung des Strömungsprofils im Anschluß an die Verengung führt, was eine Anordnung der Verengung nahe der Anspritzseite empfiehlt. Es können aber auch über die Länge des borstenformenden Kanals Verengungen vorgesehen werden, um gestufte Borsten zu erhalten, wobei auch hier die Verengungen positive Auswirkungen auf die Molekularstruktur und die Kristallbildung haben.

Der Querschnitt des borstenformenden Kanals nach einem gegebenenfalls vorgeschalteten Einlaufbereich wird vorzugsweise mit einer größten Weite von ≤ 3mm gewählt, so daß die spritzgegossene Borste einen entsprechenden Durchmesser mit einem gegebenenfalls breiteren Wurzelbereich aufweist. Borsten diesen Querschnitts mit einem breiteren Wurzelbereich lassen sich durch Extrudieren bzw. Spinnen nicht herstellen. Der Begriff "größte Weite" bedeutet hierbei, daß die Borste auch einen von der Kreisform abweichenden, z.B. ovalen Querschnitt, aufweisen kann, wobei die größte Weite der Länge der größeren Achse des Ovals entspricht.

Das erfindungsgemäße Verfahren läßt sich gleichermaßen vorteilhaft dahingehend modifizieren, daß die Polymerschmelze gleichzeitig in mehrere benachbart angeordnete borstenformende Kanäle unter Bildung einer entsprechenden Anzahl von Borsten gespritzt wird, so daß sich in einem Spritzgießvorgang ein Satz von Borsten herstellen läßt. Durch Minimierung des Abstandes der borstenformenden Kanäle lassen sich Borstenanordnungen in Form von Bunden (pucks) durch leichtes Kompaktieren der entformten Borsten herstellen.

Die Anzahl und Anordnung der borstenformenden Kanäle kann auch so getroffen werden, daß mit einem Spritzvorgang der gesamte Borstenbesatz einer Bürste oder eines Pinsels erzeugt wird, wobei die Abstände zwischen den Borsten und ihre geometrische Zuordnung entsprechend der gewünschten Anordnung im Borstenbesatz variiert werden kann.

In einer weiteren Ausführung ist vorgesehen, daß die Polymerschmelze unter gleichzeitiger Bildung einer Verbindung zwischen wenigstens zwei Borsten in die benachbart angeordneten, borstenformenden Kanäle gespritzt wird, wobei die Verbindung sowohl für die weitere Handhabung der verbundenen Borsten, als auch als Hilfsmittel zur Verbindung mit einem Bürstenkörper, Pinselgriff oder dergleichen dienen kann. Stattdessen kann nach dem Spritzen der Borsten aus einem Polymer eine Polymerschmelze aus einem anderen Polymer nachgespritzt werden, um die Verbindung zwischen den Borsten herzustellen. Die Verbindung kann in Form von Stegen, mehrere Borsten verbindenden Gittern oder dergleichen ausgebildet werden. Bei Verwendung verschiedener Polymere mit einem Fügefaktor ≥20% ist eine ausreichend sichere Verbindung gewährleistet.

Die Verbindung kann ferner so gestaltet werden, daß sie einen Borstenträger bildet, der zugleich den Bürstenkörper oder einen Teil desselben darstellen kann oder aber durch Aufspritzen mindestens einer anderen Polymerschmelze zu einem Bürstenkörper oder Pinselgriff vervollständigt werden kann. Dabei kann es sich um ein anderes thermoplastisches oder thermoelastisches Polymer handeln.

In einer weiteren Variante des Verfahrens können mehrere Borsten mit unterschiedlicher Länge gespritzt werden, so daß in Kombination mit dem sie verbindenden Borstenträger ein kompletter Borstenbesatz oder Teilbesatz für eine Bürste oder einen Pinsel herstellbar ist, bei der die Borstenenden auf unterschiedlicher Höhe einer ebenen oder nichtebenen Hüllflächen liegen, um mit der fertigen Bürste gekrümmte Konturen mit den Borstenenden optimal zu erfassen..

Ebenso können die mehreren Borsten mit unterschiedlichen Querschnitten gespritzt werden, um bei einer fertigen Bürste in vorgegebenen Bereichen unterschiedliche Wirkungen zu ermöglichen. Gleichermaßen können die mehreren Borsten mit über deren Länge unterschiedlichem Querschnittsverlauf gespritzt werden. Schließlich können die mehreren Borsten auch in nicht-paralleler Lage zueinander gespritzt werden, um einen Borstenbesatz mit unterschiedlicher Borstenstellung zu erzeugen.

Gemäß einer anderen Ausführung des Verfahrens können Borsten gleicher Geometrie, aber unterschiedlicher Biegeelastizität (Härte) durch Spritzgießen verschiedener Polymerschmelzen in denselben Formkanälen erzeugt werden. Bei extrudierten Borsten für Bürsten mit unterschiedlichen Härtegraden (textures), z.B. für Zahnbürsten mit den Härtegraden weich, mittel, hart, konnte der gewünschte Härtegrad nur über den Durchmesser der Borste beeinflußt werden, d.h. es waren für Zahnbürsten gleicher Bauweise bis zu drei verschiedene Borstendurchmesser bereitzuhalten und zu verarbeiten. Mit dem erfindungsgemäßen Verfahren können diese Härtegrade allein durch die Polymerwahl und gegebenenfalls eine Anpassung des Spritzdrucks bei gleichem Borstendurchmesser verwirklicht werden.

Die Borsten können weiterhin aus einem Polymer oder einer Polymermischung gespritzt werden, die im erstarrten Zustand reduzierte sekundäre Bindungskräfte aufweisen. Solche Borsten lassen sich nach der Herstellung, gegebenenfalls auch erst nach der Weiterverarbeitung zu Bürsten oder Pinseln durch mechanische Kräfte spalten und auf diese Weise flags bilden.

Schließlich können die Borsten aus einem Polymer mit bei Gebrauch wirksam werdenden Additiven gespritzt werden. Dabei kann es sich um Additive mit mechanischer, z.B. abrasiver Wirkung, oder beispielsweise bei Borsten für Zahnbürsten um Additive mit pflegender, therapeutischer oder remineralisierender Wirkung handeln. Additive dieser Art sind vielfältig bekannt.

Die Erfindung betrifft ferner eine Vorrichtung zum Spritzgießen von Borsten aus thermoplastischen Polymeren, umfassend eine Einrichtung zur Erzeugung des Spritzdrucks und eine Spritzgießform, die wenigstens einen Zuführkanal für die Polymerschmelze und wenigstens eine Kavität in Gestalt eines Formkanals mit einer der Länge und dem Querschnittsverlauf der herzustellenden Borste entsprechenden Formkontur aufweist, wobei dem Formkanal Entlüftungsmittel zum Abführen der beim Spritzgießen verdrängten Luft zugeordnet sind. Vorrichtungen dieses Aufbaus sind in dem eingangs beschriebenen Stand der Technik bekannt.

Erfindungsgemäß zeichnet sich eine solche Vorrichtung durch die kennzeichnenden Merkmale des Anspruchs 31 aus. Dabei ist vorgesehen, daß die Einrichtung zur Erzeugung eines Spritzdrucks von vorzugsweise wenigstens 500 bar ($0,5 \cdot 10^5$ kPa) ausgelegt ist und daß das Verhältnis der größten Weite des Querschnitts des Formkanals zu dessen Länge $\leq$ 1:10 ist. Die Entlüftungsmittel weisen über die Länge des Formkanals verteilt angeordnete Entlüftungsquerschnitte auf, die im Zusammenwirken mit dem Spritzdruck zur Ausbildung einer Scherströmung mit hoher Kerngeschwindigkeit im Zentrum der Polymerschmelze und großer Scherwirkung an der Wandung des Formkanals ausgelegt sind.

Mit einer solchen Vorrichtung können Borsten durch Spritzgießen hergestellt werden, wie sie im Zusammenhang mit dem Verfahren bereits beschrieben sind. Gegenüber bekannten Spritzgießvorrichtungen zur Herstellung von Borsten bzw. von einstückigen Bürsten mit Borsten, ist die Vorrichtung gemäß der Erfindung so gestaltet, daß in dem die Borste formenden Kanal die angestrebte Strömungsdynamik erreicht wird.

Die Einrichtung zur Erzeugung des Spritzdrucks ist vorzugsweise so ausgelegt, daß Spritzdrücke zwischen 500 und 4000 bar ($0,5 \cdot 10^5$ bis $4 \cdot 10^5$ kPa) in Abhängigkeit von der Länge und dem Querschnittsverlauf des Formkanals einstellbar sind. Der Druck wird umso höher gewählt, je kleiner der Querschnitt der herzustellenden Borste und je größer deren Länge ist.

Die Einrichtung zur Erzeugung des Spritzdrucks und die Entlüftungsquerschnitte am Formkanal sind konstruktiv und steuerungstechnisch so ausgelegt, daß die Polymerschmelze in dem Formkanal einen spezifischen Druck von wenigstens 300 bar ($0,3 \cdot 10^5$ kPa) bis zu 1300 bar ($1,3 \cdot 10^5$ kPa) hat. Diese Auslegung erfolgt in Anpassung an den Massestrom und die bis zum Formkanal zu überwindenden Strömungswiderstände.

Bei einem gegebenen, ausreichend hohen Spritzdruck an der Erzeugungseinrichtung ist vorzugsweise vorgesehen, daß der Spritzdruck in Abhängigkeit von der Länge und dem Querschnittsverlauf des Formkanals steuerbar ist, um mit einem Spritzgießaggregat Spritzgießformen verschiedener Geometrie abspritzen zu können.

Diesem Zweck kann die weitere Maßnahme dienen, daß die Entlüftungsmittel in Abhängigkeit von dem spezifischen Druck steuerbare Entlüftungsquerschnitte aufweisen.

Bei der erfindungsgemäßen Vorrichtung sind vorteilhafterweise der Spritzgießform mit dem Formkanal Kühlmittel zugeordnet, wobei es sich um eine externe Kühlung nach jedem Spritzgießtakt bzw. nach dem Entformen handeln kann. Es können aber auch dem Formkanal in der Spritzgießform Kühlmittel zugeordnet sein, mit denen der Formkanal auf niedriger Temperatur gehalten wird.

In einer besonders bevorzugten Ausführung der Erfindung ist vorgesehen, daß die Spritzgießform aus mehreren quer zur Längserstreckung des Formkanals geschichteten Formplatten besteht, von denen jede einen Längenabschnitt des Formkanals aufweist.

Im Gegensatz zum Stand der Technik mit mehr oder weniger blockförmigen Spritzgießformen sieht die Erfindung einen aus Formplatten geschichteten Aufbau vor. Dieser Aufbau ermöglicht es, in jeder Formplatte, die eine geringe Dicke aufweist, kleinste Bohrungsquerschnitte in hoher Präzision herzustellen. Diese wie aber auch jede andere Fertigungstechnik würde bei größeren Bohrungstiefen versagen. Dies ist nicht zuletzt der Grund dafür, daß man bisher auf längsgeteilte Spritzgießformen bei der Herstellung von engen Querschnitten angewiesen war. Deren Nachteile sind im Zusammenhang mit dem Stand der Technik beschrieben. Durch die erfindungsgemäße Auflösung der Spritzgießform in mehrere Platten lassen sich Formkanäle großer Länge mit hoher und reproduzierbarer Präzision über die gesamte Länge verwirklichen. Die das Ende der Formkanäle aufweisenden Formplatten, die das Borstenende abformen, können aufgrund der geringen Dicke der Formplatten Kavitäten mit nur geringer Tiefe aufweisen, die ohne zusätzliche Entlüftungsmaßnahmen das Borstenende konturenscharf und ohne jede Formtrennaht abbilden. Das in engen Formquerschnitten beobachtete Oxidieren des Polymers durch den sog. Dieseleffekt tritt bei der geringen Tiefe der Kavität nicht ein.

Der geschichtete Aufbau der Spritzgießform gibt ferner die Möglichkeit, die Entlüftungsmittel an den Formplatten, also in einer ihrer Anzahl entsprechenden Häufigkeit auszubilden. Vorzugsweise sind die Entlüftungsmittel zwischen den einander zugekehrten Auflageflächen der Formplatten ausgebildet, beispielsweise durch enge Spalte oder Kanäle. Aufgrund der hohen Fließgeschwindigkeit der Polymerschmelze senkrecht zu solchen engen Spalten oder Kanälen ist trotz des hohen Drucks ein Eindringen der Schmelze in die Entlüftungsquerschnitte verhindert. Die Entlüftungsquerschnitte können deshalb auch größer sein als bei einer zweischaligen Form, deren Formtrennebene in Fließrichtung der Schmelze liegt. Die Entlüftungsquerschnitte können mit einer maximalen Weite von nur wenigen μm bis zu 300μm ausgebildet sein.

Vorzugsweise sind die Entlüftungsmittel ganz oder teilweise durch Oberflächenrauhigkeiten an den einander zugekehrten Flächen der Formplatten gebildet.

In weiterhin vorteilhafter Ausgestaltung weisen die Entlüftungsmittel Entlüftungsquerschnitte auf, die sich ausgehend von der Formkontur des Formkanals nach außen erweitern, so daß die Luft nach Passieren der engsten Stellen der Entlüftungsquerschnitte behinderungsfrei abströmen kann.

Die allein durch den spezifischen Druck im Formkanal erfolgende Verdrängung der Luft kann noch dadurch unterstützt werden, daß die Entlüftungsmittel mit einer externen Unterdruckquelle in Verbindung stehen.

Die Vorrichtung kann so ausgebildet sein, daß der Formkanal einen über seine Länge im wesentlichen gleichbleibenden oder einen sich zu seinem Ende im wesentlichen gleichförmig verjüngenden Querschnitt aufweist, um zylindrische oder leicht konische Borste zu erhalten.

Praktische Spritzversuche unter den angegebenen Verfahrensbedingungen haben gezeigt, daß sich der Formkanal bei linearer Achse mit einem Winkel < 1,0° verjüngen kann, um eine ausreichende Formschräge für das Entformen einer schwach konischen Borste mit hervorragendem Biegeverhalten zu erhalten.

Ferner kann der Formkanal einen sich zum Ende diskontinuierlich verjüngenden Querschnitt aufweisen, um speziell gestaltete Borstenenden in Anpassung an den Verwendungszweck der fertigen Borstenware zu erhalten.

Die größte Weite des Querschnitts des Formkanals beträgt vorzugsweise ≤ 3mm. Damit werden die für Qualitätsbürsten und Pinsel gewünschten Borstenquerschnitte abgedeckt.

Den Formplatten mit dem Formkanal mit der vorgenannten größten Weite kann an ihrer dem Zuführkanal zugewandten Seite wenigstens eine anspritzseitige Formplatte mit einer sich zum Formkanal verjüngenden Erweiterung vorgeschaltet sein, um einerseits einen verstärkten Querschnitt an der Borstenwurzel und an der Borstenbasis zu erzeugen, andererseits aufgrund dieser Erweiterung im Einlaufbereich des Formkanals eine Dehnströmung zu erhalten, die die Ausbildung der gewünschten Strömungsdynamik unterstützt. Die Erweiterung kann sich trompetenartig zu dem Formkanal verengen, um einen übergangslosen Ansatz der Borste an dem die Borsten verbindenden Träger, Bürstenkörper oder dergleichen zu schaffen, was insbesondere für Hygienebürsten jeder Art von Bedeutung ist.

Das Verhältnis der größten Weite des Querschnitts des Formkanals zu dessen Länge beträgt vorzugsweise zwischen 1:10 und 1:250 kann aber auch bis 1:1000 reichen, wobei das verhältnis näher dem höheren Wert liegt, je enger der Querschnitt des Formkanals ist bzw, umgekehrt umso näher dem kleineren wert liegt, je größer der engste Querschnitt ist.

In weiterer Ausgestaltung der Erfindung ist vorgesehen, daß die Anzahl und Dicke der Formplatten auf die Länge des Formkanals abgestimmt sind, wobei die Anzahl der Formplatten umgekehrt proportional dem Verhältnis von größter lichter Weite des Querschnitts zur Länge des Formkanals ist. Ferner kann die zu einer Spritzgießform gehörende Anzahl der Formplatten variabel sein, um mit derselben Form Borsten variierender Länge herstellen zu können.

Die Formplatten weisen vorzugsweise eine Dicke auf, die etwa das Drei- bis Fünfzehnfache des mittleren Durchmessers des Formkanals beträgt. Für eine Borste mittleren Durchmessers von 0,3mm und einer Länge von 10,5mm weisen die Formplatten beispielsweise eine Dicke von 1,5mm bis 2,00mm auf. Der in der Formplatte vorhandene Längenabschnitt des Formkanals von 1,5mm bis 2,0mm läßt sich sehr präzise bohren.

Die Formplatten können einzeln oder in Gruppen senkrecht zu ihrer Plattenebene bewegbar sein. Hiermit wird insbesondere das Entformen der Borste in einer vom Stand der Technik abweichenden Weise möglich, indem beispielsweise die Formplatten beginnend mit der die Formkontur am Ende des Formkanals aufweisenden Formplatte und endend mit der dem Zuführkanal zugewandten Formplatte einzeln oder in Gruppen zeitlich nacheinander abrückbar sind.

Die Formplatten werden unter dem verfahrensbedingt hohen Schließdruck der Spritzgießmaschine zuverlässig zusammengehalten und sind beim Spritzgießen trotz ihrer geringen Dicke keinen Verformungskräften ausgesetzt sind. Ferner werden die Entlüftungsquerschnitte durch den Schließdruck zugehalten, benötigen insbesondere keine zusätzlichen Zuhalteeinrichtungen, wie dies bei längsbelüfteten Kanälen der Fall ist.

Praktische Versuche haben ergeben, daß bei den vorgesehenen engen Querschnitten und Kanallängen ganz erhebliche Auszugskräfte erforderlich sind, um die Borsten zu entformen, sofern beispielsweise nur zwei Formplatten vorhanden sind. In der Regel reißt die Borste ab. Durch Steigerung der Plattenzahl und deren sukzessives Abrücken voneinander ist ein beschädigungsfreies Entformen der Borste möglich, insbesondere wenn die dem Zuführkanal zugewandte Formplatte zuletzt abgerückt wird. Beim Entformen wirken die Lochränder jeder Formplatte ähnlich einer Ziehdüse, die allfällig vorhandene "Polymerhäute", die sich in der Formtrennebene bilden, ohne nachteilige Folgen für den Borstenmantel glatt verziehen. Die Borstenenden sind ohnehin einwandfrei abgeformt.

Es können ferner einzelne Formplatten parallel zu den benachbarten Formplatten verschiebbar sein, um nach dem Spritzgießvorgang die Borste quer zu beanspruchen und dadurch eine Optimierung der Molekularstruktur zu erzielen.

In weiterhin bevorzugter Ausführung weist die Spritzgießform Formkanäle mit unterschiedlicher Länge und/ oder mit unterschiedlichem Querschnittsverlauf auf, um beispielsweise in einem Spritzgießtakt einen Borstenbesatz der gewünschten Geometrie und Konfiguration zu erhalten.

Gemäß einer weiteren Ausführungsform weist die Spritzgießform Formkanäle mit einer Mittelachse auf, die unter einem gegenüber der Bewegungsrichtung der Formplatten geneigten Winkel verläuft, wobei jede Formplatte einen Längenabschnitt des Formkanals aufweist, dessen Länge so bemessen ist, daß trotz der Winkelabweichung ein Entformen durch sukzessives Abrücken der einzelnen Formplatten möglich ist.

Die Aufteilung der Spritzgießform in eine Mehrzahl von quer zum Formkanal verlaufenden Formplatten gibt die Möglichkeit, den Formkanal in solche Längenabschnitte aufzuteilen, die auch dann, wenn die Borstenachse gegenüber der Bewegungsrichtung der Formplatten (Entformungsrichtung) geneigt ist, noch ein Entformen der einzelnen Längenabschnitte ermöglicht, ohne die Borste zu stark zu beanspruchen oder zu verformen. Auf diese Weise lassen sich in einer einzigen Spritzgießform Borstengruppen herstellen, bei denen die Borsten parallel zueinander, aber winklig zu einem sie verbindenden Borstenträger angeordnet sind oder aber untereinander unterschiedliche Winkelstellungen aufweisen.

Gemäß einer weiteren Ausführung weist die Spritzgießform Formkanäle mit einer Mittelachse auf, die gegenüber der Bewegungsrichtung der Formplatten gekrümmt ist, wobei jede Formplatte einen Längenabschnitt des Formkanals aufweist, der so bemessen ist, daß in Abhängigkeit von der Krümmung ein Entformen durch sukzessives Abheben der einzelnen Formplatten möglich ist.

Auf diese Weise lassen sich beispielsweise gewellte Borsten herstellen, die sich gleichwohl einwandfrei entformen lassen. Auch können in einer einzigen Spritzgießform gleichzeitig gerade, gewellte und gekrümmte Borsten hergestellt werden.

In einer weiteren Ausführungsform weist die Spritzgießform wenigstens eine Formplatte auf, die in ihrer Ebene gegenüber den benachbarten Formplatten verschiebbar ist und zusammen mit diesen nach dem Spritzgießen der Borsten eine auf dem entsprechenden Teil der Länge des Formkanals wirksame Klemmeinrichtung für sämtliche Borsten bildet.

Die Erfindung schafft damit die Möglichkeit, Teile der Spritzgießform als Halterung für die gespritzten Borsten einzusetzen, um sie in der Spritzgießform nur auf einem Teil ihrer Länge zu fixieren, beispielsweise um die endennahen Formplatten in Entformungsrichtung von den verbleibenden Formplatten abzurücken und die Borstenspritzlinge mitzunehmen, so daß die Borsten auf einer mittleren Teillänge, nämlich zwischen diesen Formplatten und den verbleibenden Formplatten freigestellt werden. Durch anschließendes Verschieben der klemmenden Formplatten und Zurückbewegen der endennahen Formplatten in Richtung des Anspritzendes der Borsten überragen diese Enden die anspritzseitige Formplatte. Durch Umsetzen der Spritzgießform, gegebenenfalls unter weiterhin klemmender Wirkung der Halterung, kann die Spritzgießform mit einem anderen Spritzgießwerkzeug in Verbindung gebracht werden, das eine einem Borstenträger oder Bürstenkörper abformende Formkavität aufweist. In einem weiteren Spritzgießvorgang werden die überstehenden Enden mit einer weiteren, diese Formkavität ausfüllenden Polymerschmelze umspritzt.

Die Klemmeinrichtung kann ferner als Transporthalterung dienen, um die geklemmten Borsten nach dem Entformen aus den anderen Formplatten in eine andere Arbeitsstation zum Verbinden mit einem Bürstenkörper umzusetzen. Dies bietet sich auch dann an, wenn die Borsten bereits über eine Verbindung wie Stege, Gitter oder Borstenträger miteinander verbunden sind. Die klemmende Formplatte befindet sich dann nahe dem Übergang der Borsten zum Borstenträger und wird die Halterung in Entformungsrichtung unter gleichzeitigem Entformen der Verbindung abgerückt und anschließend umgesetzt und werden die als Halterung dienenden Formplatten durch einen gleichen Satz von Formplatten ersetzt, um wieder eine komplette Spritzgießform zu erhalten. Die Halterung kann als Wanderhalterung in einer Umlaufbahn geführt und nach dem vollständigen Entfernen der Borsten auch aus der Halterung wieder zur Ergänzung der Spritzgießform genutzt werden. Sofern die Verbindung nicht unmittelbar für die nächsten Konfektionierungsschritte, z.B. Stecken, Kleben, Schweißen, Umspritzen etc., benötigt wird, kann sie auch abgetrennt werden und können nur die Borsten in einer der bekannten Fügetechniken mit einem Borstenträger oder Bürstenkörper verbunden werden.

In weiterer Ausgestaltung der Erfindung ist vorgesehen, daß die Spritzgießform aus wenigstens zwei Gruppen von Formplatten mit Klemmeinrichtung besteht, von denen die erste Gruppe einen Teil des Formkanals mit dessen Ende und die weiteren Gruppen den restlichen Teil des Formkanals umfassen, wobei die erste Gruppe von der zweiten Gruppe und die nachfolgenden jeweils voneinander zeitlich nacheinander abrückbar sind. Der Spritzgießvorgang wird dann in einer der Anzahl der Gruppen entsprechenden Anzahl von Spritzgießtakten aufgeteilt derart, daß in der geschlossenen Ausgangslage der Spritzgießform die Polymerschmelze in einem ersten Spritzgießtakt in den vollständigen Formkanal gespritzt wird, daraufhin die erste Gruppe von den weiteren unter Mitnahme des Spritzlings mittels der Klemmeinrichtung abrückbar ist, wobei der Abrückweg kleiner als die Länge des Spritzlings ist, anschließend in einem zweiten Spritzgießtakt weitere Polymerschmelze in den freigestellten Längenabschnitt des Formkanals der weiteren Gruppen gespritzt wird und die Schritte Spritzen/Abheben wiederholt werden, bis die vorletzte Gruppe von der letzten Gruppe abgerückt ist, um Borsten größerer Länge als die Länge des Formkanals zu erzeugen. Die Herstellung der Borste erfolgt also abschnittsweise und ermöglicht die Herstellung von Borsten größerer Längen.

Bei dieser Ausbildung der Vorrichtung kann auch in jedem Spritzgießtakt eine andere Polymerschmelze gespritzt werden, so daß eine über die Borstenlänge mehrkomponentige Borste erhalten werden kann, bei der die in jeder Stufe eingesetzten Polymere auf das Anforderungsprofil der Borste und ihrer Anbindung an den Borstenträger abgestimmt werden können. Auf diese weise wird eine Mehrbereichsborste erhalten. Die Abrückbewegungen der einzelnen Gruppen können nach dem Spritzgießtakt in kurzem zeitlichem Abstand, bei dem der Spritzling so weit abgekühlt ist, daß er bei der Abrückbewegung aus den verbleibenden Formplatten entformt wird, erfolgen. Die Verbindung zwischen den einzelnen Bereichen erfolgt vorzugsweise stoffschlüssig, kann aber auch form- oder kraftschlüssig durch entsprechende Profilierung des Endes der zuletzt gespritzten Teillänge erfolgen.

Vorzugsweise ist die das Borstenende und die Formkontur am Ende des Formkanals aufweisende Formplatte gegen eine Formplatte mit anderer Formkontur zur Erzeugung von Borsten mit unterschiedlich geformten Enden auswechselbar. Diese Formplatte sollte nur flache Konturen enthalten, um das für den Gebrauchszweck maßgebliche Borstenende einwandfrei entformen zu können.

Auf diese Weise kann bei ansonsten gleichbleibender Geometrie der Borsten deren Endenkontur variiert werden, beispielsweise spitze oder mehr oder minder gerundete Enden oder auch Borsten mit gegliedertem Ende (zwei Spitzen oder dergleichen) hergestellt werden. Auch kann diese Formplatte unterschiedlich tiefe Längenabschnitte des Formkanals aufweisen, um bei einem Borstenbesatz eine konturierte Hüllfläche für die Borstenenden zu bilden.

Vorzugsweise ist zwischen dem Zuführkanal und den Formkanälen der Spritzgießform eine zwei oder mehr Formkanäle verbindende Formkavität zur Ausbildung einer Verbindung der Borsten untereinander angeordnet, die gegebenenfalls auch alle Borsten verbinden kann. Sie kann entweder als Hilfsmittel für die weitere Handhabung des gesamten Borstenbesatzes oder als Hilfsmittel für die Vervollständigung des Borstenbesatzes mit einem Bürstenkörper dienen.

Die Formkavität kann ferner zur Erzeugung eines Bürsten- oder Pinselkörpers oder eines Teils desselben ausgebildet sein.

Dabei kann insbesondere die Formkavität zur Erzeugung eines Bürsten- oder Pinselkörpers oder eines Teils desselben in einer Mehrkomponentenausführung aus unterschiedlichen Polymeren ausgebildet sein.

Nachstehend ist die Erfindung anhand von in der Zeichnung wiedergegebenen Schemata und Ausführungsbeispielen beschrieben. In der Zeichnung zeigen:

Fig.1          ein Schema des Geschwindigkeitsprofils in Formkanälen verschiedenen Durchmessers;

Fig.2 bis 4    je eine schematische Ansicht einer Ausführungsform des Formkanals mit den jeweiligen Geschwindigkeitsprofilen;

Fig.5          eine schematische Ansicht einer in einem Formkanal gemäß Fig.2 spritzgegossenen Borste mit den für die Längsorientierung maßgeblichen Geschwindigkeitsprofilen;

Fig.6          eine schematische Ansicht einer Einschnürung eines Formkanals mit einer Dehnströmung;

Fig.7          eine schematische Ansicht einer konischen Borste im Maßstab 2:1 mit Vermaßung;

Fig.8          eine schematische Ansicht einer konischen Borste im Maßstab 1:5 mit Vermaßung;

Fig.9          eine vergleichende, schematische Darstellung der Geschwindigkeitsprofile in einer Extrusionsdüse und in einem Formkanal;

Fig.10 bis 13  je einen schematischen Längsschnitt eines Ausführungsbeispiels einer Spritzgießform in verschiedenen Betriebsphasen;

Fig.14         einen schematischen Längsschnitt eines weiteren Ausführungsbeispiels anhand der Spritzgießform;

Fig.15         ein vergrößertes Detail der Spritzgießform gemäß Fig.14 im Bereich eines außen liegenden Formkanals;

Fig.16 bis 20  je einen schematischen Längsschnitt eines abgewandelten Ausführungsbeispiels einer Spritzgießform in verschiedenen Betriebsphasen;

Fig.21 bis 23    je einen schematischen Längsschnitt eines weiteren Ausführungsbeispiels der Spritzgießform in verschiedenen Betriebsphasen;

Fig.24    einen den Fig.21 bis 23 entsprechenden Längsschnitt der Spritzgießform mit einer diese ergänzenden Form;

Fig.25, 26    je einen Längsschnitt einer Spritzgießform in einer weiterhin abgewandelten Ausführung in zwei Betriebsphasen;

Fig.27, 28    je einen Längsschnitt entsprechend den Fig.25, 26 mit einer konturierten Schubplatte;

Fig.29, 30    je einen Längsschnitt entsprechend Fig.25, 26 mit einer anderen Form des Spritzlings;

Fig.31    einen schematischen Längsschnitt einer Spritzgießform zur Herstellung von Borsten unterschiedlicher Längserstreckung;

Fig.32    einen schematischen Schnitt einer Spritzgießform zur Herstellung von Borsten mit gegliederten Borstenenden;

Fig.33    eine schematische Ansicht einer Borste in starker Vergrößerung;

Fig.34    eine schematische Ansicht der Anordnung von zwei Borsten in starker Vergrößerung;

Fig.35    eine schematische Ansicht einer weiteren Ausführungsform der Borste in stark vergrößertem Maßstab;

Fig.36    eine Draufsicht auf das freie Ende der Borste gemäß Fig.35.

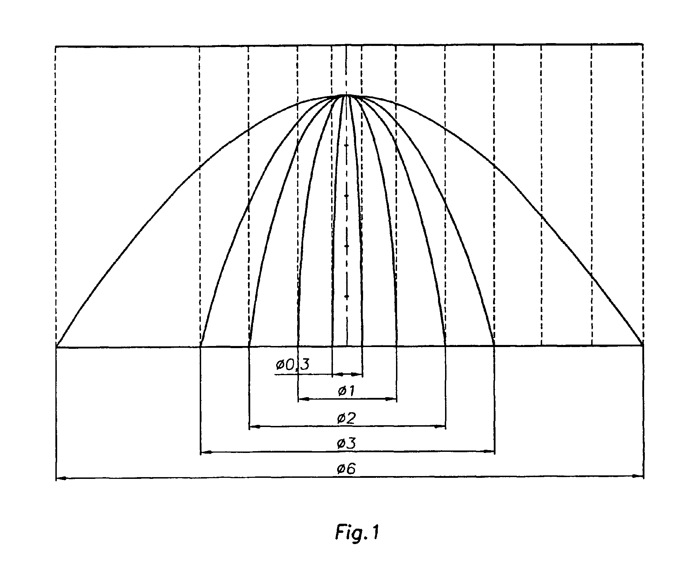

Fig.1 zeigt schematisch das Strömungsprofil (Geschwindigkeitsprofil) in borstenformenden Kanälen verschiedenen Durchmessers. Die Wände der Kanäle sind mit gestrichelten senkrechten Linien angedeutet und die zugehörigen Durchmesser in [mm] unterhalb des Diagramms angegeben. Der kleinste borstenformende Kanal weist einen Durchmesser von 0,3mm, der größte einen Durchmesser von 6mm auf. Bei gleicher Strömungsgeschwindigkeit im Zentrum des Kanals, die nachfolgend als Kerngeschwindigkeit bezeichnet ist, bilden sich in Abhängigkeit vom Kanaldurchmesser (= Borstendurchmesser) die wiedergegebenen Strömungsprofile aus, die in einer groben Annäherung als parabelförmig bezeichnet werden können. Bei gleichbleibendem Durchmesser des Formkanals über dessen Länge ändert das Strömungsprofil seine Form nicht oder allenfalls unwesentlich.

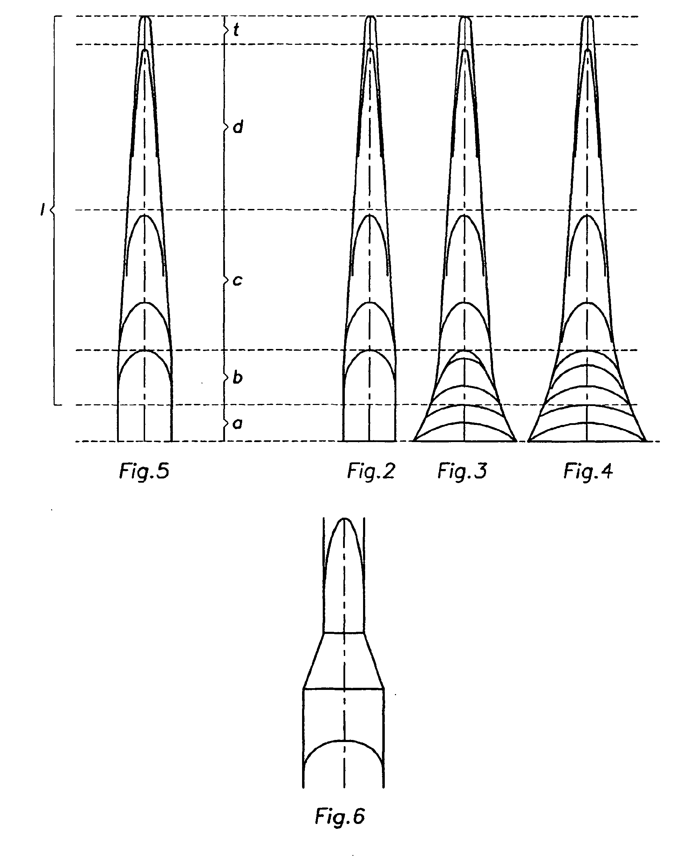

Bei schwach konischen Formkanälen, wie sie in Fig.2 bis 4 schematisch gezeigt sind, läßt sich die Kerngeschwindigkeit bei gleich hohem Druck noch steigern und aufgrund der Wandreibung im wandnahen Bereich eine starke Scherwirkung erzielen. Wird ein solcher Formkanal im Wege des Spritzgießens mit Polymerschmelze beaufschlagt, ergibt sich im Wandbereich aufgrund der Scherwirkung eine ausgeprägte Längsorientierung der Moleküle, während in einer nicht spannungsinduzierten Schmelze die Moleküle ihre energetisch günstigste Knäuelstruktur aufweisen. Übertragen auf die in den Formkanal unter entsprechend hohem Druck gespritzte Polymerschmelze bedeutet dies eine Verstärkung der erzeugten Borste im wandnahen Bereich, die bei entsprechend hoher Kerngeschwindigkeit bis an das Borstenende reicht, während die Molekularorientierung zum Zentrum hin abnimmt. Die Molekülorientierung aufgrund der Scherströmung mit starker Scherwirkung im wandnahen Bereich ist ferner überlagert von einer spannungsinduzierten Kristallbildung, wobei die Bildung von langen Nadelkristallen durch die starke Scherwirkung im Randbereich gefördert wird. Zudem wird durch den angewandten hohen Spritzdruck die Keimbildung und Kristalldichte günstig beeinflußt. Bei einem spezifischen Spritzdruck im Formkanal > 300 bar ($0,3 \cdot 10^5$ kPa), vorzugsweise > 1300 bar ($1,3 \cdot 10^5$ kPa), lassen sich bei Vorsorge einer ausreichenden Entlüftung des Formkanals eine wesentliche Steigerung des Elastizitätsmoduls und damit der Biegeelastizität, verbunden mit einer Erhöhung der Zerreißfestigkeit (Zugfestigkeit) feststellen. Der genannte spezifische Druck setzt einen Spritzdruck von > 500 bar ($0,5 \cdot 10^5$ kPa) an der druckerzeugenden Einrichtung voraus.

Eine in einem Formkanal gemäß Fig.2 hergestellte Borste gemäß Fig.5 weist einen relativ biegesteifen Wurzelbereich a und auf ihrer freien Länge 1 eine zum Borstenende hin zunehmende Biegeelastizität bei hoher Zugfestigkeit auf. Während der Wurzelbereich a vornehmlich zur Anbindung an oder Einbindung in einen Borstenträger oder Bürstenkörper dient, weist die Borste auf ihrer freien Länge 1 einen Schaftbereich (stem section), bestehend aus einer Schaftbasis b und dem eigentlichen Schaft c auf. Die Reduzierung des für die Biegeauslenkung maßgeblichen Querschnitts in den Bereichen b und c wird durch Erhöhung der Biegeelastizität aufgrund der zuvor beschriebenen Effekte ausgeglichen. An dem Schaftbereich b, c schließt sich der eigentliche Wirkbereich d, d.h. der für die Bürstwirkung maßgebliche Bereich an, der zusammen mit dem Tipbereich t̲ den die Flexibilität der Borste bestimmenden Bereich bildet. Der Tipbereich und dessen Formgebung bestimmen die unmittelbare Oberflächenwirkung der Borste, die Eindringtiefe in Oberflächenunebenheiten etc. Abweichend von Fig.2 kann die Borste bei einer dem eigentlichen Formkanal vorgeschalteten Erweiterung, wie sie in Fig.3 und 4 gezeigt ist, einen mehr oder weniger ausgeprägten trompetenartigen Wurzelbereich aufweisen.

Die stabilisierenden Effekte können noch dadurch verbessert und insbesondere auch bei kurzer Borstenlänge erreicht werden, wenn an der Eintrittsseite der Polymerschmelze eine diskontinuierliche Einschnürung vor Übergang in den eigentlichen borstenformenden Kanal vorgesehen wird, wie dies in Fig.6 gezeigt ist. An der Einschnürung bildet sich eine Dehnströmung aus, die auf kurzer Strecke zur Bildung einer hohen Kerngeschwindigkeit mit großer Scherwirkung im wandnahen Bereich führt.

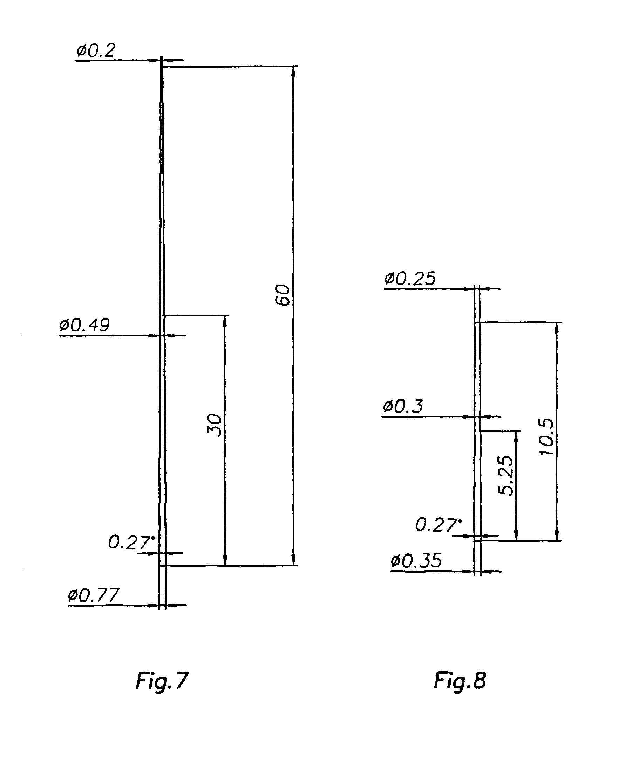

Mit den erfindungsgemäßen Betriebsparametern für den Spritzdruck und der dadurch erzielbaren hohen Kerngeschwindigkeit mit großer Scherwirkung durch Wandreibung lassen sich durch Spritzgießen dünne Borsten mit variabler Länge herstellen, wie dies bisher nicht einmal durch Extrudieren von Endlosmonofilen möglich war, wobei sich eine schwache Konizität bei Borsten aus solchen Endlosmonofilen nur durch erheblichen verfahrenstechnischen Aufwand (Intervallabzug) verwirklichen läßt. In Fig.7 und 8 sind zwei Ausführungsbeispiele gezeigt. Fig.7 gibt im Maßstab 2:1 eine Borste mit einem Durchmesser von 0,77mm im Wurzelbereich und 0,2mm am Borstenende wieder, die auf der halben Länge einen mittleren Durchmesser von 0,49mm aufweist. Bei einer äußerst schwachen Konizität mit einem Winkel von 0,27°, der der Formschräge des borstenformenden Kanals entspricht, lassen sich Borsten mit einer Länge von 60mm oder mehr durch Spritzgießen herstellen, wie sie beispielsweise für hochwertige Pinsel oder dergleichen benötigt werden. Sie weisen einen mittleren Durchmesser auf halber Borstenlänge von ca. 0,5mm auf. Fig.8 zeigt im Maßstab 5:1 eine Borste mit einem Durchmesser 0,35mm im Wurzelbereich und 0,25mm am Borstenende bei einer Borstenlänge von 10,5mm und gleichem Konuswinkel (Formschräge). Der mittlere Durchmesser beträgt 0,3mm. Borsten dieser Art eignen sich beispielsweise für Zahnbürsten. Aufgrund der schlanken Geometrie solcher Borsten lassen sich diese sehr dicht anordnen, ohne daß - im Gegensatz zu herkömmlich spritzgegossenen Borsten - der Abstand im Bereich der Borstenenden zu groß wird.

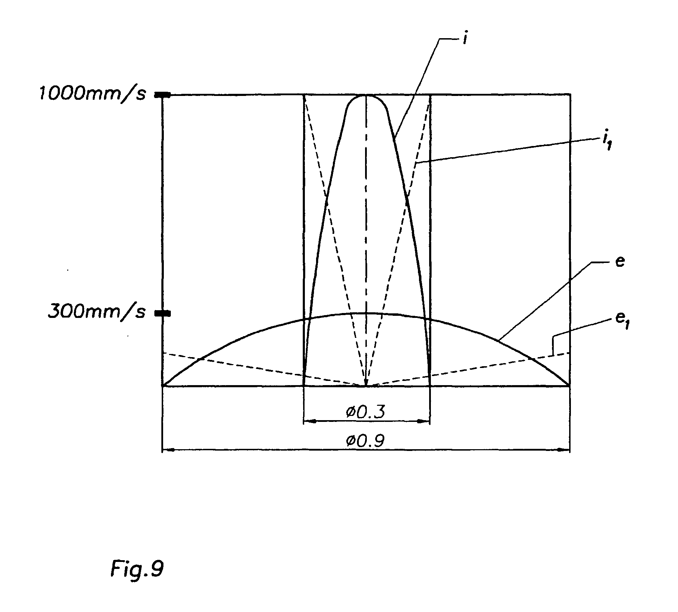

Die technische und gebrauchstechnische Überlegenheit der erfindungsgemäß hergestellten Borste gegenüber einer im Extrusionsverfahren hergestellten Borste wird anhand der Fig.9 deutlich.

Beim Extrusionsspinnen eines Monofils für die Herstellung einer Borste mit einem mittleren Durchmesser von 0,3mm weist die Spinndüse einen Austrittsdurchmesser von 0,9mm auf, wie in Fig.9 durch die äußeren senkrechten Linien angedeutet. Die Polymerschmelze hat innerhalb der Düse eine maximale Fließgeschwindigkeit (Kerngeschwindigkeit) von typischerweise ca. 300mm/s. Sie wird von dem Extruderdruck und der Abzugsgeschwindigkeit des Monofils bestimmt. Das die Düse verlassende Monofil wird auf einer kurzen Strecke mittels der Abzugskräfte auf einen Durchmesser verstreckt, der zwischen 0,9 und 0,3mm liegt, und unmittelbar danach abgekühlt, um die Molekularstruktur zu fixieren. Beim anschließenden Nachverstrecken erhält das Monofil den endgültigen Durchmesser von 0,3mm mit einer Durchmessertoleranz von ca. $\pm$10%. Das Geschwindigkeitsprofil ist in Fig.9 mit e̲ (extrusion) bezeichnet.

Beim erfindungsgemäßen Spritzgießen weist der borstenformende Kanal einen mittleren Durchmesser von 0,3mm auf. Er ist in Fig.9 mit den beiden inneren senkrechten Begrenzungslinien angedeutet. Bei einem Spritzdruck im Bereich von 2000 bar ($2 \cdot 10^5$ kPa) ergibt sich in dem Kanal eine Kerngeschwindigkeit von ca. 1000mm/s. Das Geschwindigkeitsprofil ist mit i̲ (injection) bezeichnet. Für die Eigenverstärkung des thermoplastischen Polymers ist die Scherwirkung in der Strömung, insbesondere im wandnahen Bereich maßgeblich, die durch die Scherrate (Schermoment) $\gamma$ bestimmt ist. Die Scherrate $\gamma$ über den Radius r des Fließkanals errechnet sich aus der Ableitung des Geschwindigkeitsprofils nach dem Radius r

$$\gamma(r) = \left| \frac{dv(r)}{dr} \right| = \frac{2\, v_{max}}{R^2} \bullet r$$

Damit ist eine umgekehrte Proportionalität zum Quadrat des effektiven Durchmessers des Strömungskanals gegeben. Zur maximalen Fließgeschwindigkeit (Kerngeschwindigkeit) ist die Scherrate in der ersten Potenz proportional. Bei dem oben gezeigten Beispiel ergeben sich somit für die gespritzte Borste Scherraten, die die in der angegebenen Extrusionsströmung um wenigstens das 10-fache übersteigen.

Die Scherraten sind in Fig.9 ohne Skalierung mit gestrichelten Linien für die Extrusion mit $e_1$ und für das Spritzgießen mit $i_1$ wiedergegeben. Sie weisen ihre Maxima jeweils an den Wänden der Düse bzw. des borstenformenden Kanals auf.

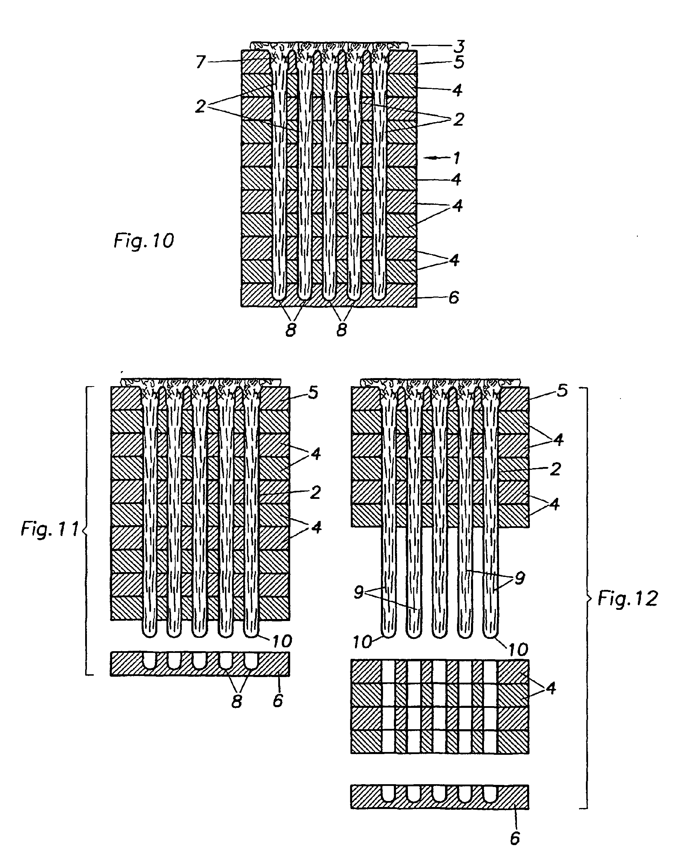

In den Fig.10 bis 13 ist in schematischer Wiedergabe eine Ausführungsform einer Spritzgießform, wie sie zum Spritzgießen von Borsten nach dem erfindungsgemäßen Verfahren besonders geeignet ist, in verschiedenen Betriebsphasen wiedergegeben. Der Maßstab ist stark vergrößert, um Einzelheiten besser zu verdeutlichen.

Die Spritzgießform 1 weist mehrere parallele Formkanäle 2 großer Länge auf, die über einen Zuführkanal 3 an eine Spritzgießeinrichtung angeschlossen sind. Die Spritzgießeinrichtung ist so ausgelegt, daß Spritzdrücke im Bereich von 500 bar (0,5·$10^5$ kPa), vorzugsweise ≥ 2000 bar (2·$10^5$ kPa) erzeugt werden können. Die exakte Höhe des Spritzdrucks wird in Abhängigkeit von dem Querschnittsverlauf des Formkanals 2 über dessen Länge und in Abhängigkeit von der Länge selbst so eingestellt, daß in dem Formkanal ein spezifischer Druck > 300 bar (0,3·$10^5$ kPa) gegeben ist.

Die Spritzgießform besteht aus einer Vielzahl geschichteter Formplatten 4, die im wesentlichen gleiche Dicke aufweisen, sowie aus einer anspritzseitigen Formplatte 5 und einer die Borstenenden formenden Formplatte 6. Die Formplatten 4, 5 und 6 weisen je einen Längenabschnitt des Formkanals 2 auf, die vorzugsweise durch Bohrungen erzeugt sind.

Die anspritzseitige Formplatte 5 weist Erweiterungen 7 auf, die sich zum Formkanal 2 hin verengen, um beispielsweise eine Dehnströmung gemäß Fig.6 zu erzeugen und den Wurzelbereich a (Fig.5) der Borste zu formen. Die anschließenden Längenabschnitte des Formkanals in den Formplatten 4 weisen einen zylindrischen oder leicht konischen Querschnittsverlauf über ihre Länge auf, während die die Borstenenden bildende Formplatte 6 Sacklöcher 8, die beim gezeigten Ausführungsbeispiel kalottenförmig ausgebildet sind, aufweisen.

Beim Spritzgießen tritt die Polymerschmelze über den Zuführkanal 3 in die sich verengenden Erweiterungen 7 der Formplatte 5 ein und füllt aufgrund der hohen Kerngeschwindigkeit den gesamten Formkanal bis zu der die Enden formenden Platte 6. Im Zuführkanal 3 weist die Polymerschmelze noch eine weitgehend ungeordnete, knäuelartige Molekularstruktur auf, die in der anspritzseitigen Erweiterung 7 und dem anschließenden Formkanal 2 aufgrund der ausgeprägten Scherströmung in eine längsorientierte Molekularstruktur umgewandelt wird.

Die Formplatten 4, 5 und 6 sind senkrecht zur Plattenebene bewegbar, um die spritzgegossenen Borsten nach Erreichen einer ausreichenden Formstabilität zu entformen. Vorzugsweise ist das Spritzgießwerkzeug 1 so gekühlt, daß die Wandung der Formkanäle 2 relativ kalt bleibt, wodurch die Kristallbildung in der Polymerschmelze unterstützt wird.

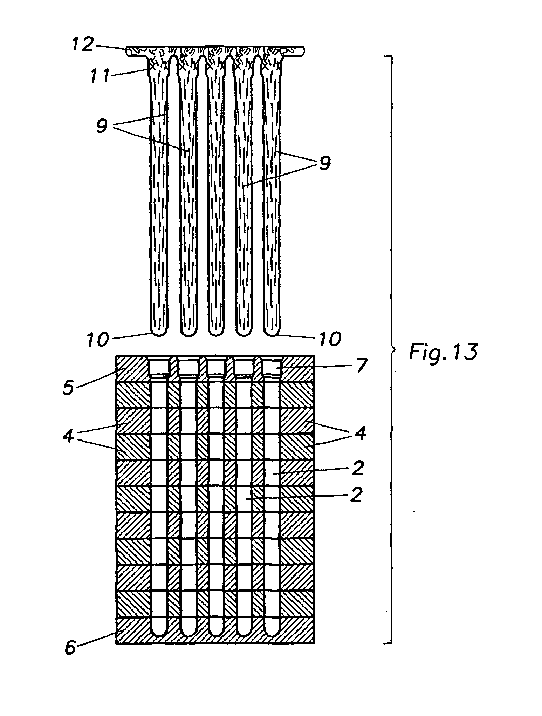

Zum Entformen der Borsten wird zunächst die Formplatte 6 abgerückt (Fig.11). Dabei sind nur sehr geringe Haftkräfte zu überwinden, wodurch gewährleistet ist, daß die für den späteren Gebrauch einer Bürste oder eines Pinsels besonders wichtigen Borstenenden konturengleich erhalten bleiben. Danach werden die Formplatten 4 einzeln oder in Gruppen abgerückt (Fig.12), bis die Borsten 9 mit ihren Enden 10 auf dem größten Teil ihrer Länge entformt sind. Während dieser Entformungsschritte werden die Borsten mittels der anspritzseitigen Formplatte 5 zurückgehalten und abschließend auch diese Formplatte 5 abgerückt, so daß sämtliche Borsten 9 mit ihrem etwas verdickten Wurzelbereich 11 freigestellt sind (Fig.13). Die Polymerschmelze im anspritzseitigen Zuführkanal bildet zugleich eine Verbindung 12 für sämtliche Borsten 9 und kann der gesamte Spritzling entnommen und zu einer Bürste, einem Pinsel oder dergleichen komplettiert werden, wobei die Verbindung in den Aufbau integriert wird oder nur als Hilfsmittel zum Handhaben der Borsten dient und vor dem Verbinden der Borsten mit einem Bürstenkörper oder dergleichen abgetrennt wird.

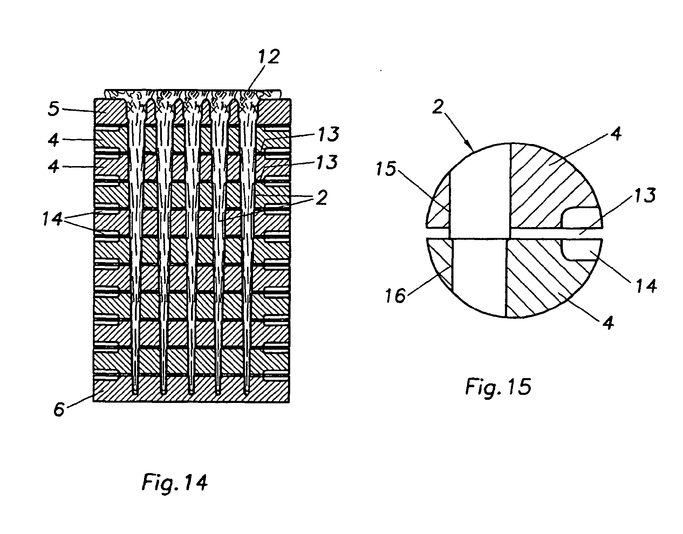

Während des Spritzgießens ist für eine die gewünschte hohe Kerngeschwindigkeit ermöglichende optimale Entlüftung der Formkanäle zu sorgen. Fig.14 zeigt hierfür ein Ausführungsbeispiel. Die Entlüftung erfolgt über enge Spalte 13 zwischen den Formplatten 4, 5 und 6, so daß über die gesamte Länge der Formkanäle 2 die Luft entsprechend dem Fortschreiten der Schmelzefront abgeführt wird. Statt enger Spalte 13 können auch die einander zugekehrten Flächen der Formplatten 4, 5 und 6 aufgerauht werden, so daß sich in der Summe ausreichend große Entlüftungsquerschnitte ergeben. Um die abströmende Luft schnell entweichen zu lassen, weisen die Entlüftungsquerschnitte nach außen Erweiterungen 14 auf.

Die Formkanäle 2 können sich über ihre gesamte Länge mit einer Formschräge < 1,0° verjüngen, wobei die Verjüngung weniger eine Frage des Entformens, als eine Frage der gewünschten Borstenform und ihres Biegeverhaltens ist. Der Querschnittsverlauf der Formkanäle 2 kann aber auch von einer kontinuierlichen Konizität abweichen, wie dies im Zusammenhang mit der vorgesehenen Entlüftung in Fig.15 in vergrößertem Maßstab gezeigt ist. In der in der Zeichnung oberen Formplatte 4 ist ein zylindrischer Längenabschnitt 15 und in der unten wiedergegebenen Formplatte 4 ein zylindrischer Längenabschnitt 16 des Formkanals 2 gezeigt. Zwischen den beiden Formplatten 4 verengt sich der Querschnitt vom Längenabschnitt 15 auf den Längenabschnitt 16 des Formkanals 2 um wenige μm, so daß eine an dieser Stelle eine schwache Stufe entsteht. An dieser Stelle erfolgt auch die Entlüftung über den Spalt 13 zwischen den beiden Formplatten, die in einer Erweiterung 14 auslaufen. Beim Entformen treten diese unmerklichen Stufen optisch nicht in Erscheinung, führen aber auf der gesamten Länge der Borste zu einer leichten Konizität. Die Längenabschnitte 15, 16 in den einzelnen Formplatten 4 lassen sich auf diese Weise durch einfaches Bohren erzeugen. Stattdessen können die Längenabschnitte in den einzelnen Formplatten auch gleiche Durchmesser aufweisen, so daß eine zylindrische Borste erhalten wird. Bei ausgeprägteren Durchmessersprüngen kann auch eine gestufte Borste erzeugt werden.

Eine konische Ausbildung der Borste hat spritzgießtechnisch bzw. entformungstechnisch den Vorteil, daß der kleinste Querschnitt am Borstenende schneller abkühlt als die anschließenden Bereiche der Borste bis zum Wurzelbereich. Die schrittweise Entformung vom Borstenende zur Borstenwurzel folgt also dem Temperaturgradienten in der Borste.

Die Dicke der Formplatten 4 beträgt einige Millimeter. Sie kann etwa dem Drei- bis Fünfzehnfachen des Durchmessers des Formkanals 2 entsprechen, so daß ein außerordentlich präzises Verbohren der Längenabschnitte in den einzelnen Formplatten möglich ist. Da sie unter dem Schließdruck der Spritzgießmaschine in Anlage aneinander gehalten werden, bleiben selbst diese dünnen Formplatten trotz des hohen Spritzdrucks maß- und formhaltig. Aufgrund der geringen Dicke ist auch eine gute Wärmeableitung gewährleistet, da die Formplatten untereinander durch die Entlüftungsspalte gleichsam isoliert sind. Sie lassen sich aus dem gleichen Grund auch problemlos kühlen, beispielsweise durch externe Kühlmittel, die bei geschlossener Form insbesondere aber auch in der Zeit zwischen dem Öffnen und erneuten Schließen besonders wirksam werden können. Aufgrund er Freistellung der Formplatten und ihrer geringen Dicke findet ein wirksames Kühlen schon allen durch die Umgebungsluft statt. Stattdessen können die Kühlmittel aber auch in die Formplatten oder zwischen diesen integriert sein. Schließlich gibt die geringe Beanspruchung unter dem Spritzdruck die Möglichkeit, die Formplatten aus gut wärmeleitfähigen Werkstoffen mit geringeren Festigkeitswerten als Stahl oder dergleichen auszubilden.

Die Wirkungen einer effektiven Kühlung auf die Molekularstruktur der Borsten ist bereits erläutert worden.

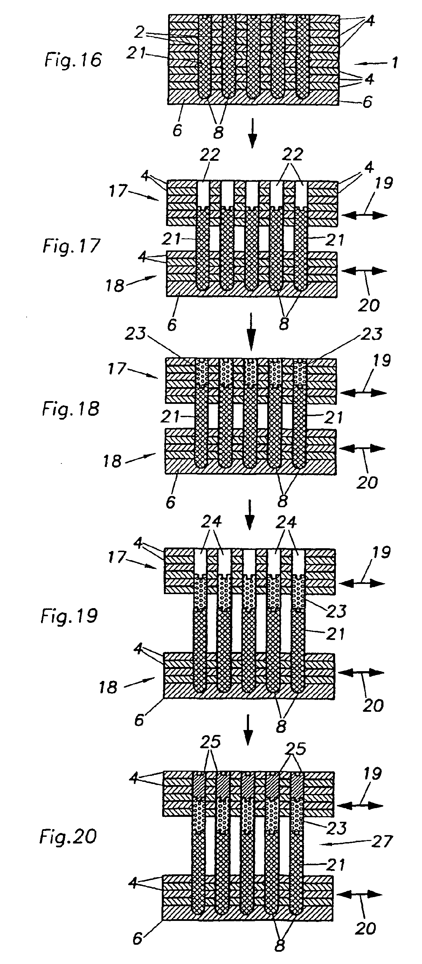

Fig.16 zeigt wiederum eine Spritzgießform 1 in schematischer Darstellung, die aus geschichteten Formplatten 4 besteht, wobei die anspritzseitige Formplatte keine erweiterten Querschnitte aufweist. Abweichend von den zuvor beschriebenen Ausführungsformen sind die Formplatten 4 in zwei Gruppen 17, 18 unterteilt (siehe Fig.17), wobei jede Gruppe wenigstens eine quer verschiebbare Formplatte aufweist, wie dies in Fig.17 bis 20 mit den Doppelpfeilen 19, 20 angedeutet ist.

Diese quer verschiebbaren Formplatten wirken zusammen mit den benachbarten Formplatten als eine Art Klemmeinrichtung für die Spritzlinge 21, die bei diesem Ausführungsbeispiel nur einen Bereich (Längenabschnitt) der endgültigen Borste bilden. Der Spritzling 21 wird aus einem thermoplastischen Polymer mit einem auf diesen Längenabschnitt der fertigen Borste abgestimmten Eigenschaftsprofil gespritzt. Nach dem Spritztakt wird wenigstens eine verschiebbare Platte in der Gruppe 18 der Formplatten 4 (Fig.17) in Klemmlage gebracht und werden die Spritzlinge 21 bei Abrücken der Gruppe 18 mitgenommen und dabei aus den Formplatten 4 der anspritzseitigen Gruppe 17 teilweise entformt, so daß in den Formplatten 4 der Gruppe 17 ein vorgegebener Längenabschnitt 22 der Formkanäle freigestellt wird. Am Ende des Spritzlings 21 können gegebenenfalls Profilierungen angeformt sein, wie sie in der Zeichnung angedeutet sind. Nach dem Abrücken der Formplatten 4 der Gruppe 18 wird die verschiebbare Formplatte in der Gruppe 17 in Klemmposition gebracht und werden daraufhin die freigestellten Längenabschnitte 22 mit einer Polymerschmelze gefüllt, die aus einem anderen Polymer oder einem Polymer mit anderen Additiven besteht. Die sich dabei bildenden Längenabschnitte 23 der Borste verbinden sich mit den Spritzlingen 21 durch Stoff- und/oder Formschluß. Anschließend wird die verschiebbare Formplatte in der Gruppe 17 in ihre Ausgangslage zurückgeführt und werden die Spritzlinge 21 mit den angeformten Längenabschnitten 23 bei geschlossener Klemmeinrichtung in der Gruppe 18 wiederum aus den Formkanälen der Gruppe 17 teilweise herausgezogen, so daß in den Formkanälen Längenabschnitte 24 freigestellt werden. In einem weiteren Spritzgießtakt werden die Längenabschnitte 24 mit einer weiteren Polymerschmelze mit gegebenenfalls nochmals differenzierten Eigenschaften gefüllt, so daß schließlich Mehrbereichsborsten 27 erhalten werden, die aus drei Bereichen (Abschnitte 21, 23 und 25) bestehen, die über die Länge der Borsten unterschiedliche Festigkeitswerte und/oder unterschiedliche Gebrauchseigenschaften aufweisen. Dabei kann insbesondere der das Borstenende einschließende Bereich 21 auch als Verbrauchsanzeige für den Abnutzungsgrad der Borste dienen. Das endgültige Entformen der Borsten erfolgt in der zuvor beschriebenen Weise.

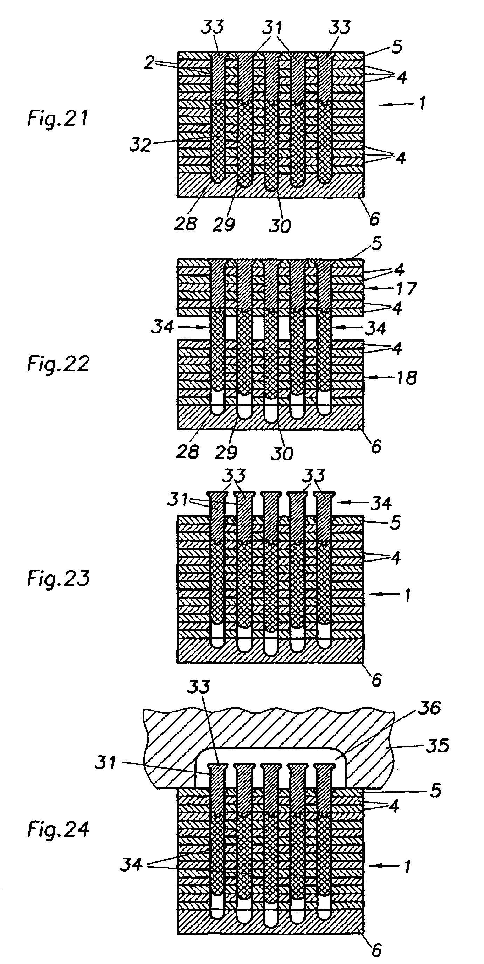

In den Fig.21 bis 24 ist wiederum eine Spritzgießform 1 (Fig.21) gezeigt, die aus zwei Gruppen 17, 18 von Formplatten 4 besteht, die jeweils mindestens eine quer verschiebbare Formplatte zur Bildung einer Klemmeinrichtung aufweisen. Im Gegensatz zur zuvor beschriebenen Ausführung weist die anspritzseitige Formplatte 5 wiederum Erweiterungen auf, die sich zum Formkanal hin verjüngen. Die die Borstenenden abformende Formplatte 6 weist unterschiedlich tiefe Sacklöcher 28, 29 und 30 mit kalottenförmigem Lochgrund auf, so daß eine Mehrzahl von Borsten unterschiedlicher Länge hergestellt werden kann, deren Enden auf einer gekrümmten Hüllfläche liegen.

Bei dem Ausführungsbeispiel gemäß Fig.21 bis 24 werden Borsten mit zwei unterschiedlichen Bereichen 31, 32 nacheinander gespritzt, wobei der Bereich 31 eine erweiterte Borstenwurzel 33 aufweist. Die auf diese Weise gespritzten Mehrbereichsborsten 34 (Fig.22) werden anschließend an ihren Enden entformt, indem die die Borstenenden bildende Formplatte 6 und - gegebenenfalls zeitverzögert - die Formplatten 4 der Gruppe 18 abgerückt werden (Fig. 22). Danach wird wenigstens eine quer verschiebbare Formplatte in der Gruppe 18 in Klemmlage gebracht und die gesamte Gruppe 18, gegebenenfalls zusammen mit der endständigen Formplatte 6, in entgegengesetzter Richtung verfahren, so daß die Borsten 34 mit einem Teil ihres Bereichs 31 mit dem Wurzelbereich 33 die anspritzseitige Formplatte 5 überragen. Anschließend wird die Spritzgießform 1 (Fig.23) mit einer weiteren Spritzgießform 35 mit einer Formkavität 36 in Verbindung gebracht, in die eine Polymerschmelze gespritzt wird, mit der die Wurzelbereiche 23 und die in die Kavität 36 hineinragenden Längenabschnitte der Bereiche 31 umspritzt werden. Die Formkavität 36 kann so ausgebildet sein, daß sie einen Zwischenträger für die Borsten oder einen vollständigen Bürstenkörper bildet, in den die Borstenenden auszugsfest und spaltlos eingebettet sind.

In Abwandlung dieser Ausführungsform können die Formkanäle 2 der Spritzgießform 1 gemäß Fig.21 auch vollständig mit einer einzigen Polymerschmelze gefüllt werden und können deren Wurzelbereiche mit dem anschließenden Längenabschnitt in der in Fig.22 und 23 gezeigten Weise freigestellt werden, um gemäß Fig.24 mit einer trägerformenden Polymerschmelze umspritzt zu werden.

In weiterer Abwandlung können die gemäß Fig.21 bis 23 gespritzten und an ihren befestigungsseitigen Enden freigestellten Borsten durch Abrücken der die Enden abbildenden Formplatte 6 und der überwiegenden Anzahl der folgenden Formplatten 4 vollständig entformt werden, während sie von einigen wenigen, nämlich minimal drei Formplatten, z.B. der anspritzseitigen Formplatte 5 und den beiden folgenden Formplatten, von denen eine quer verschiebbar zur Bildung einer Klemmeinrichtung ist, gehalten werden. Diese als Transporthalterung dienenden Formplatten können dann zusammen mit den Borsten in eine andere Spritzgießstation verbracht werden, in der sie mit der Spritzgießform 35 in Verbindung gebracht werden, während gleichzeitig ein neuer Satz von Formplatten mit anspritzseitiger Formplatte 5 herangebracht wird, um die Spritzgießform 1 zu vervollständigen. Diese Transporthalterung kann nicht nur zum Verbringen der Borsten in die zweite Spritzgießstation, sondern auch zum Weitertransport in andere Bearbeitungsstationen dienen.

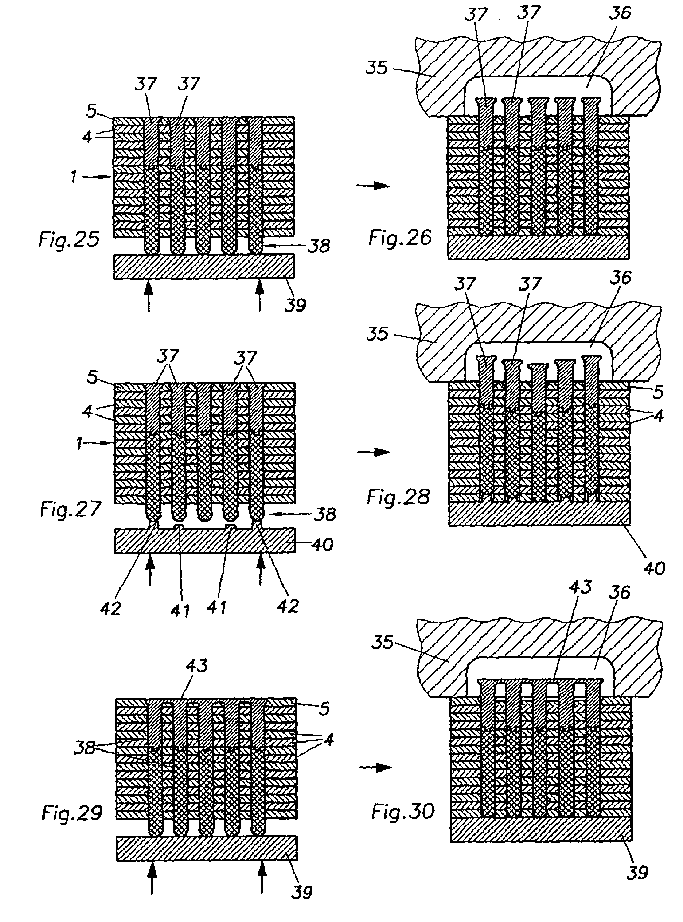

Fig.25 und 26 zeigen einen Teil einer Spritzgießform 1 mit Formplatten 4 und 5 nach dem Herstellen der Borsten und Abrücken wenigstens der (nicht gezeigten) endständigen Formplatte 6. Statt dieser wird vor die freigestellten Enden der Borsten 38 eine ebene Schubplatte 39 eingefahren, mittels der die Borsten 38 in den Formkanälen der verbleibenden Formplatten verschoben werden, bis sie mit ihrem Wurzelbereich 37 und gegebenenfalls einem daran anschließenden Längenabschnitt die anspritzseitige Formplatte 5 überragen bzw. in die Formkavität 36 der weiteren Spritzgießform 35 hineinragen und mit einer einen Borstenträger oder einen Bürstenkörper bildenden Polymerschmelze umspritzt werden.

Fig.27 und 28 zeigt ein Ausführungsbeispiel, bei dem nach Herstellung der Borsten 38 in der mit Bezug auf Fig.25 und 26 beschriebenen Weise statt der ebenen Schubplatte 39 eine Schubplatte 40 vor die freigestellten Borstenenden eingefahren wird, die mit unterschiedlich hohen nockenartigen Vorsprüngen 41 und 42 versehen ist. Nach Heranfahren der Schubplatte 40 an die Formplatten 4 werden die Borsten auf den Schubweg unterschiedlich tief in den Formkanälen verschoben, so daß sie mit ihrem Wurzelbereich 37 unterschiedlich weit in die Formkavität 36 der Spritzgießform 35 hineinragen und nach Umspritzen und Abrücken der Schubplatte 40 sowie der Formplatten 4 und 5 die Borstenenden auf einer gekrümmten Hüllfläche liegen.

Fig.29 und 30 zeigt ein Ausführungsbeispiel, das sich von dem der Fig.25 und 26 nur dadurch unterscheidet, daß die Borsten 38 im Bereich der anspritzseitigen Formplatte 5 über eine Verbindung 43 in Form von Stegen, Gittern oder dergleichen miteinander verbunden sind und nach dem Verschieben mittels der Schubplatte 39 mit der Verbindung 43 und den anschließenden Längenabschnitten der Borsten 38 in die Kavität 36 der Spritzgießform 35 hineinragen.

Eine kleinere Gruppe von Formplatten 4, vorzugsweise unter Einschluß der einspritzseitigen Formplatte 5, und mit wenigstens einer als Klemmeinrichtung wirkenden, quer verschiebbaren Formplatte 4 kann auch als Transporthalterung für das Umsetzen der Borsten in weitere Spritzgießstationen, Bearbeitungsstationen oder dergleichen dienen.

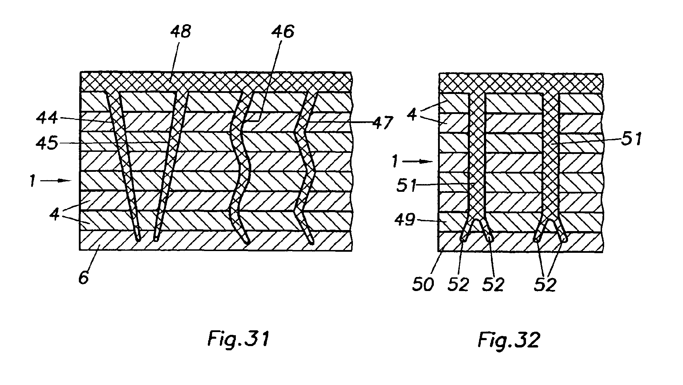

Der schichtweise Aufbau der Spritzgießform aus einer Vielzahl von Formplatten und das dadurch mögliche abschnittsweise Entformen sowie die durch die erfindungsgemäßen Verfahrensparameter des Spritzdrucks und der Strömungsgeschwindigkeit im Formkanal erzielte Steigerung des Elastizitätsmoduls und der Zugfestigkeit erlauben auch die Herstellung von Borsten, deren Mittelachse nicht in der Entformungsrichtung liegt. Beispiele hierfür sind in den Fig. 31 und 32 gezeigt. Fig.31 zeigt einen Teil einer Spritzgießform mit geneigten Formkanälen 44, 45, die bei dem Ausführungsbeispiel gegeneinander geneigt sind. Zusätzlich oder stattdessen kann die Spritzgießform 1 wellenförmig gekrümmte Formkanäle 46 oder mehrfach abgewinkelte Formkanäle 47 aufweisen, so daß entsprechend geformte Borsten erhalten werden, die über eine Verbindung 48 im Verbund gespritzt werden können. Beim Entformen werden die Formplatten 4 und 6, beginnend mit letzterer abgerückt und die Borsten abschnittsweise entformt, wobei sie aufgrund ihrer hohen Biegeelastizität und der geringen Entformungslänge keine Deformationen erleiden.

Die Borsten können nach Abtrennen der Verbindung einzeln oder in Gruppen oder aber zusammen mit der Verbindung 48 durch Umspritzen derselben oder durch andere thermische oder mechanische Verbindungsverfahren bekannter Art zu einer Bürste konfektioniert werden.

Bei dem Ausführungsbeispiel gemäß Fig.32 weist die Spritzgießform 1 wiederum geschichtete Formplatten 4 und zwei endständige Formplatten 49, 50 auf, die zur Ausbildung stärker gegliederter Borstenenden dienen. Die spritzgegossenen Borsten 51 weisen jeweils fingerartige Borstenenden 52 auf, die sich aufgrund der dünnen Formplatten und der erhöhten Stabilität der Borsten problemlos entformen lassen.

Die die Borstenenden ausbildenden Formplatten 6 oder 49, 50 können insbesondere bei stärker gegliederten Borstenenden gegebenenfalls aus einem Sintermetall bestehen, das auch in diesem Bereich für eine zusätzliche Entlüftung sorgt, um Lufteinschlüsse wirksam zu vermeiden. Selbstverständlich können auch die Formplatten 4 aus solchen Sintermetallen bestehen, um die Entlüftung der Formkanäle zu unterstützen. Mikrorauhigkeiten, wie sie beispielsweise bei Sintermetallen vorhanden sind oder auch durch Oberflächenbehandlung der Formkanäle erzeugt werden können, führen an der Oberfläche der fertigen Borste zu entsprechenden Rauhigkeiten im Mikrobereich, die bei Gebrauch der Borste zu einem feuchtigkeitsabweisenden "Lotus"-Effekt führen.

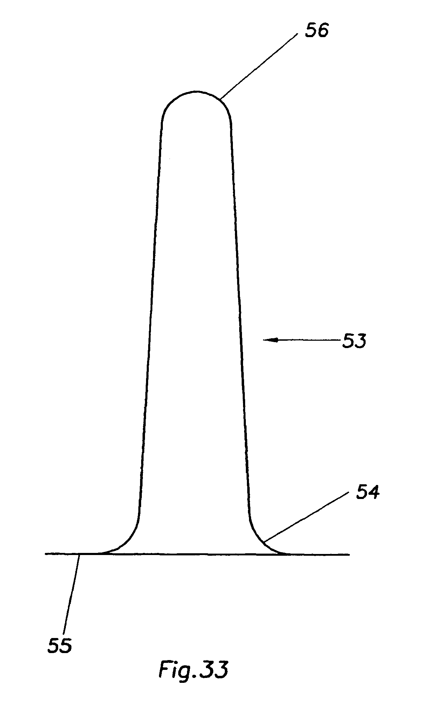

Fig.33 zeigt eine einzelne Borste 53, wie sie insbesondere für Hygienebürsten, z.B. Zahnbürsten, Reinigungsbürsten im medizinischen und Krankenhausbereich oder als Reinigungs- oder Auftragsbürsten in der Nahrungsmittelindustrie eingesetzt werden können. Durch geeignete Einstellung von Spritzdruck und Fließgeschwindigkeit (Kerngeschwindigkeit) im borstenformenden Kanal kann das Biegeverhalten der Borste mit einem mittleren Durchmesser von 0,3 bis 3mm über deren Länge optimal dem jeweiligen Gebrauchszweck angepaßt werden. Sie kann sich ferner im Wurzelbereich 54 trompetenartig erweitern, um einen relativ biegesteifen Ansatz zu erhalten, der gleichzeitig einen gut ausgerundeten Übergang zu der mit 55 angedeuteten Oberfläche des Bürstenkörpers bildet. Dieser gesamte spaltlose Bereich, wie auch die Schaftbasis und der eigentliche Schaft der Borste 53 und das in diesem Fall ebenmäßig verrundete Borstenende 56 lassen sich in der Spritzgießtechnik glattwandig oder mit Mikrorauhigkeiten in einer solchen Weise herstellen, daß sich Rauhigkeiten und Schmutz nicht festsetzen können. Aufgrund dieser Eigenschaften lassen sich Bürsten mit Borsten dieser Art auch nach der Benutzung problemlos reinigen und/oder desinfizieren, weil keine Taschen, Spalte oder dergleichen vorhanden sind. Borsten mit dieser Form und den auf die Verwendung abgestellten Eigenschaften lassen sich mit den bisher bekannten Extrusions- und Spritzgießverfahren nicht herstellen.

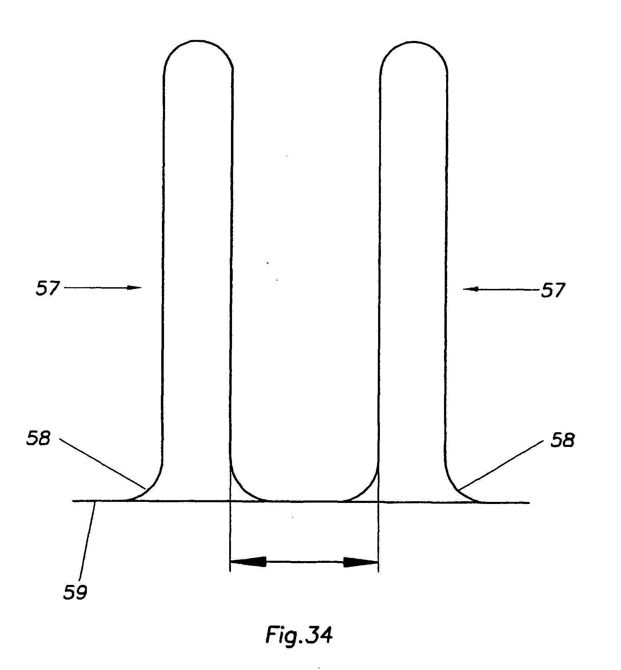

Fig.34 zeigt zwei benachbarte Borsten 57, die an ihrem trompetenartig ausgerundeten Wurzelbereich 58 über eine mit 59 angedeutete Verbindung zusammengefaßt sind. Die Borsten 57 mit der Verbindung 59 lassen sich durch das erfindungsgemäße Verfahren in einem geringen Abstand voneinander anordnen, der zudem auf den jeweiligen Anwendungszweck optimal abgestimmt werden kann, insbesondere können die Borsten 57 sehr eng gestellt sein, ohne daß Feuchtigkeit, Schmutz oder Bakterien sich irgendwo festsetzen oder nach dem Ausspülen zurückbleiben können.

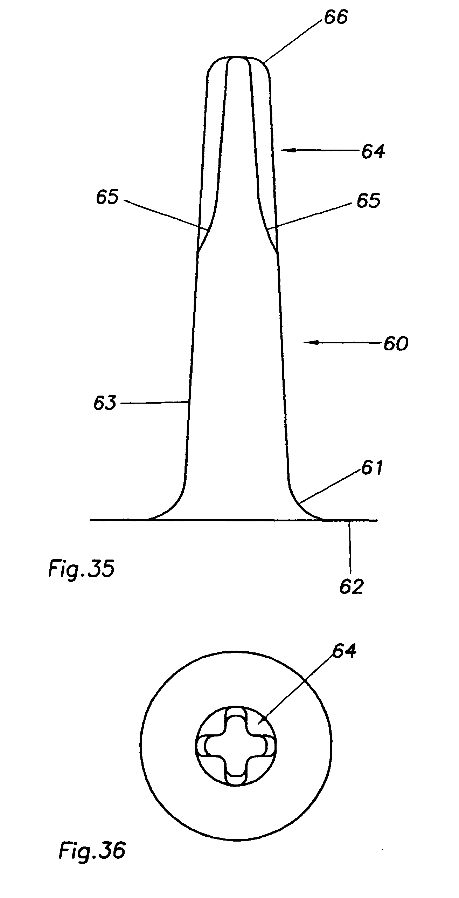

Fig.35 zeigt eine Ansicht und Fig.36 eine Draufsicht auf eine nach dem erfindungsgemäßen Verfahren hergestellte Borste 60, die wiederum am Wurzelbereich 61 in die Borstenträgerfläche 62 trompetenartig übergeht und einen Schaft 63 mit relativ großer Biegesteifigkeit und einen Wirkbereich 64 in profilierter Form aufweist. Bei diesem Ausführungsbeispiel weist der Wirkbereich 64 einen kreuzförmigen Querschnitt auf, der über weiche Übergänge 65 in den Schaftbereich übergeht. Der Wirkbereich 64 bildet mit seinem kreuzförmigen Querschnitt Bürstkanten, die bei starkem Andruck der Bürste und unter Abbiegen des Wirkbereichs wirksam werden. Bei geringerem Andruck tritt diese Wirkung am verrundeten Borstenende 66 mit dem auch dort vorhandenen Kreuzprofil ein. Ferner kann das Borstenende 66 in Ecken, Spalte und Riefen zum Reinigen derselben eindringen. Gleiche Effekte lassen sich auch mit anderen polygonalen Querschnittsformen erreichen.

**Patentansprüche**

1. Verfahren zur Herstellung einer Borste aus thermoplastischen Polymeren im Wege des Spritzgießens, indem die Polymerschmelze in einen borstenformenden Kanal (2) mit vorgegebener Länge und über diese Länge vorgegebenem Querschnittsverlauf unter Druck gespritzt und der Kanal (2) während des Spritzgießvorgangs entlüftet wird, wobei sich eine Scherströmung mit einer hohen Kerngeschwindigkeit im Zentrum der strömenden Polymerschmelze und großer Scherwirkung aufgrund der Wandreibung der Polymerschmelze unter ausgeprägter Längsorientierung der Polymermoleküle wenigstens im wandnahen Bereich der Polymerschmelze einstellt und zugleich der Kanal auf seiner Länge entlüftet wird, **dadurch gekennzeichnet, daß** der auf die Polymerschmelze wirkende Spritzdruck in Abhängigkeit vom Querschnittsverlauf des borstenformenden Kanals auf vorzugsweise wenigstens 500 bar $(0,5 \cdot 10^5$ kPa) eingestellt wird und daß das Verhältnis der größten Weite des Querschnitts des borstenformenden Kanals zur Länge des Kanals $\leq 1:10$ gewählt wird, so daß die Längsorientierung der Polymermoleküle auf der Länge des Kanals aufrechterhalten wird.

2. Verfahren nach Anspruch 1, **dadurch gekennzeichnet, daß** der Spritzdruck auf 2000 bis 5000 bar $(2 \cdot 10^5$ kPa bis $5 \cdot 10^5$ kPa) eingestellt wird.

3. Verfahren nach Anspruch 1 oder 2, **dadurch gekennzeichnet, daß** der Spritzdruck so eingestellt wird, daß die Polymerschmelze in dem borstenformenden Kanal einen spezifischen Druck größer 300 bar $(0,3 \cdot 10^5$ kPa) hat.

4. Verfahren nach einem der Ansprüche 1 bis 3, **dadurch gekennzeichnet, daß** bei gegebenem Querschnittsverlauf und Länge des borstenformenden Kanals der Spritzdruck so eingestellt wird, daß die Kristallkeimbildung zwischen benachbarten längsorientierten Molekülabschnitten unterstützt wird.

5. Verfahren nach einem der Ansprüche 1 bis 4, **dadurch gekennzeichnet, daß** der borstenformende Kanal gekühlt wird.

6. Verfahren nach einem der Ansprüche 1 bis 5, **dadurch gekennzeichnet, daß** der borstenformende Kanal quer zur Strömungsrichtung der Polymerschmelze entlüftet wird.

**7.** Verfahren nach Anspruch 6, **dadurch gekennzeichnet, daß** der borstenformende Kanal in mehreren quer zur Strömungsrichtung der Polymerschmelze liegenden Ebenen entlüftet wird.

**8.** Verfahren nach Anspruch 7, **dadurch gekennzeichnet, daß** der borstenformende Kanal auf seiner Länge über etwa abstandsgleich angeordnete Ebenen entlüftet wird.

**9.** Verfahren nach einem der Ansprüche 1 bis 8, **dadurch gekennzeichnet, daß** der borstenformende Kanal durch Verdrängen der Luft mittels des Strömungsdrucks der Polymerschmelze entlüftet wird.

**10.** Verfahren nach einem der Ansprüche 1 bis 9, **dadurch gekennzeichnet, daß** der Kanal mit Unterstützung eines äußeren Unterdrucks entlüftet wird.

**11.** Verfahren nach einem der Ansprüche 1 bis 10, **dadurch gekennzeichnet, daß** die Polymerschmelze in einen borstenformenden Kanal mit einem von der Anspritzseite aus im wesentlichen gleichbleibenden Querschnitt gespritzt wird.

**12.** Verfahren nach einem der Ansprüche 1 bis 11, **dadurch gekennzeichnet, daß** die Polymerschmelze in einen borstenformenden Kanal mit sich von der Anspritzseite im wesentlichen kontinuierlich verjüngenden Querschnitt gespritzt wird.

**13.** Verfahren nach einem der Ansprüche 1 bis 12, **dadurch gekennzeichnet, daß** die Polymerschmelze in eine sich zum borstenformenden Kanal düsenartig verengenden Einlaufbereich zur Erzeugung einer Dehnströmung gespritzt wird.

**14.** Verfahren nach einem der Ansprüche 1 bis 13, **dadurch gekennzeichnet, daß** die Polymerschmelze in einen borstenformenden Kanal gespritzt wird, dessen Querschnittsverlauf wenigstens eine Diskontinuität in Form einer Verjüngung in Strömungsrichtung der Polymerschmelze aufweist.

**15.** Verfahren nach einem der Ansprüche 1 bis 14, **dadurch gekennzeichnet, daß** der Querschnitt des borstenformenden Kanals mit einer größten Weite von ≤ 3mm gewählt wird.

**16.** Verfahren nach einem der Ansprüche 1 bis 15, **dadurch gekennzeichnet, daß** das Verhältnis der größten Weite zur Länge des Kanals ≤ 1:250 gewählt wird.

**17.** Verfahren nach einem der Ansprüche 1 bis 16, **dadurch gekennzeichnet, daß** die Polymerschmelze gleichzeitig in mehrere benachbart angeordnete borstenformende Kanäle unter Bildung einer entsprechenden Anzahl von Borsten gespritzt wird.

**18.** Verfahren nach Anspruch 17, **dadurch gekennzeichnet, daß** die Polymerschmelze unter gleichzeitiger Bildung einer Verbindung zwischen wenigstens zwei Borsten in die benachbart angeordneten, borstenformenden Kanäle gespritzt wird.

**19.** Verfahren nach Anspruch 17, **dadurch gekennzeichnet, daß** nach dem Spritzen der Borsten eine Polymerschmelze aus einem anderen Polymer unter Bildung einer Verbindung zwischen wenigstens zwei Borsten nachgespritzt wird.

**20.** Verfahren nach einem der Ansprüche 17 bis 19, **dadurch gekennzeichnet, daß** die Polymerschmelze unter Bildung wenigstens eines zwei oder mehr Borsten verbindenden Borstenträgers gespritzt wird.

**21.** Verfahren nach Anspruch 18 bis 20, **dadurch gekennzeichnet, daß** die Polymerschmelze unter Bildung eines die Borsten verbindenden und einen Bürstenkörper bildenden Borstenträgers gespritzt wird.

**22.** Verfahren nach Anspruch 20, **dadurch gekennzeichnet, daß** auf den Borstenträger wenigstens eine weitere Polymerschmelze aus einem anderen Polymer aufgespritzt wird.

**23.** Verfahren nach einem der Ansprüche 17 bis. 22, **dadurch gekennzeichnet, daß** die mehreren Borsten mit unterschiedlicher Länge gespritzt werden.

**24.** Verfahren nach einem der Ansprüche 17 bis 23, **dadurch gekennzeichnet, daß** die mehreren Borsten mit unterschiedlichen Querschnitten gespritzt werden.

25. Verfahren nach einem der Ansprüche 17 bis 24, **dadurch gekennzeichnet, daß** die mehreren Borsten mit über ihre Länge unterschiedlichem Querschnittsverlauf gespritzt werden.

26. Verfahren nach einem der Ansprüche 17 bis 25, **dadurch gekennzeichnet, daß** die mehreren Borsten in paralleler Ausrichtung zueinander gespritzt werden.

27. Verfahren nach einem der Ansprüche 17 bis 25, **dadurch gekennzeichnet, daß** wenigstens ein Teil der Borsten in nicht-paralleler Lage gespritzt werden.

28. Verfahren nach einem der Ansprüche 17 bis 27, **dadurch gekennzeichnet, daß** Borsten gleicher Geometrie, aber unterschiedlicher Biegeelastizität (Härte) durch Spritzgießen verschiedener Polymerschmelzen in denselben Formkanälen erzeugt werden.

29. Verfahren nach einem der Ansprüche 1 bis 28, **dadurch gekennzeichnet, daß** die Borsten aus einem Polymer oder einer Polymermischung gespritzt werden, die im erstarrten Zustand reduzierte sekundäre Bindungskräfte aufweisen.

30. Verfahren nach einem der Ansprüche 1 bis 29, **dadurch gekennzeichnet, daß** die Borsten aus einem Polymer mit bei Gebrauch wirksam werdenden Additiven gespritzt werden.

31. Vorrichtung zum Spritzgießen von Borsten aus thermoplastischen Polymeren, umfassend eine Einrichtung zur Erzeugung des Spritzdrucks und eine Spritzgießform (1), die wenigstens einen Zuführkanal (3) für die Polymerschmelze und wenigstens eine Kavität in Gestalt eines Formkanals (2) mit einer der Länge und dem Querschnittsverlauf der herzustellenden Borste (9) entsprechenden Formkontur aufweist, wobei dem Formkanal (2) Entlüftungsmittel zum Abführen der beim Spritzgießen verdrängten Luft zugeordnet sind, die über die Länge des Formkanals verteilt angeordnete Entlüftüngsquerschnitte (13) aufweisen, **dadurch gekennzeichnet, daß** die Einrichtung zur Erzeugung eines Spritzdrucks von wenigstens 500 bar ($0,5{\cdot}10^5$ kPa) ausgelegt ist und daß das Verhältnis der größten Weite des Querschnitts der Formkanals (2) zu dessen Länge ≤ 1:10 ist, so daß eine Scherströmung mit hoher Kerngeschwindigkeit im Zentrum der Polymerschmelze und großer Scherwirkung an der Wandung des Formkanals ausbildbar ist.

32. Vorrichtung nach Anspruch 31, **dadurch gekennzeichnet, daß** die Einrichtung zur Erzeugung des Spritzdrucks so ausgelegt ist, daß Spritzdrücke zwischen 2000 und 5000 bar ($2{\cdot}10^5$ bis $5{\cdot}10^5$ kPa) in Abhängigkeit von der Länge und dem Querschnittsverlauf des Formkanals einstellbar sind.

33. Vorrichtung nach Anspruch 31 oder 32, **dadurch gekennzeichnet, daß** die Einrichtung zur Erzeugung des Spritzdrucks und die Entlüftungsquerschnitte am Formkanal so ausgelegt sind, daß die Polymerschmelze in dem Formkanal einen spezifischen Druck von wenigstens 300 bar ($0,3{\cdot}10^5$ kPa) aufweist.

34. Vorrichtung nach einem der Ansprüche 31 bis 33, **dadurch gekennzeichnet, daß** der Spritzdruck in Abhängigkeit von der Länge und dem Querschnittsverlauf des Formkanals steuerbar ist.

35. Vorrichtung nach einem der Ansprüche 31 bis 34, **dadurch gekennzeichnet, daß** die Entlüftungsmittel in Abhängigkeit von dem spezifischen Druck steuerbare Entlüftungsquerschnitte aufweisen.

36. Vorrichtung nach einem der Ansprüche 31 bis 35, **dadurch gekennzeichnet, daß** der Spritzgießform mit dem Formkanal Kühlmittel zugeordnet sind.

37. Vorrichtung nach Anspruch 36, **dadurch gekennzeichnet, daß** dem Formkanal in der Spritzgießform Kühlmittel zugeordnet sind.

38. Vorrichtung nach einem der Ansprüche 31 bis 37, **dadurch gekennzeichnet, daß** die Spritzgießform aus mehreren quer zur Längserstreckung des Formkanals geschichteten Formplatten besteht, von denen jede einen Längenabschnitt des Formkanals aufweist.

39. Vorrichtung nach Anspruch 38, **dadurch gekennzeichnet, daß** die Entlüftungsmittel an den Formplatten ausgebildet sind.

**40.** Vorrichtung nach Anspruch 39, **dadurch gekennzeichnet, daß** die Entlüftungsmittel zwischen den einander zugekehrten Auflageflächen der Formplatten ausgebildet sind.

**41.** Vorrichtung nach Anspruch 40, **dadurch gekennzeichnet, daß** die Entlüftungsmittel durch Spalte zwischen den einander zugekehrten Flächen der Formplatten gebildet sind.

**42.** Vorrichtung nach Anspruch 40, **dadurch gekennzeichnet, daß** die Entlüftungsmittel durch Oberflächenrauhigkeiten an den Flächen der Formplatten gebildet sind.

**43.** Vorrichtung nach einem der Ansprüche 31 bis 42, **dadurch gekennzeichnet, daß** die Entlüftungsmittel an der Formkontur des Formkanals Entlüftungsquerschnitte mit einer Weite von $5\mu m$ bis $300\mu m$ aufweisen.

**44.** Vorrichtung nach einem der Ansprüche 31 bis 43, **dadurch gekennzeichnet, daß** die Entlüftungsmittel Entlüftungsquerschnitte aufweisen, die sich ausgehend von der Formkontur des Formkanals nach außen erweitern.

**45.** Vorrichtung nach einem der Ansprüche 31 bis 44, **dadurch gekennzeichnet, daß** die Entlüftungsmittel mit einer externen Unterdruckquelle in Verbindung stehen.

**46.** Vorrichtung nach einem der Ansprüche 31 bis 45, **dadurch gekennzeichnet, daß** der Formkanal einen über seine Länge im wesentlichen gleichbleibenden Querschnitt aufweist.

**47.** Vorrichtung nach einem der Ansprüche 31 bis 45, **dadurch gekennzeichnet, daß** der Formkanal einen sich zu seinem Ende im wesentlichen gleichförmig verjüngenden Querschnitt aufweist.

**48.** Vorrichtung nach Anspruch 47, **dadurch gekennzeichnet, daß** sich der Formkanal bei linearer Achse mit einem Winkel kleiner 1,0 Grad (Formschräge) verjüngt.

**49.** Vorrichtung nach einem der Ansprüche 31 bis 48, **dadurch gekennzeichnet, daß** der Formkanal einen sich zum Ende diskontinuierlich verjüngenden Querschnitt aufweist.

**50.** Vorrichtung nach einem der Ansprüche 31 bis 49, **dadurch gekennzeichnet, daß** die größte Weite des Querschnitts des Formkanals $\leq$ 3mm beträgt.

**51.** Vorrichtung nach einem der Ansprüche 31 bis 50, **dadurch gekennzeichnet, daß** den Formplatten mit dem Formkanal an ihrer dem Zuführkanal zugewandten Seite wenigstens eine anspritzseitige Formplatte mit einer sich zum Formkanal verengenden Erweiterung vorgeschaltet ist.

**52.** Vorrichtung nach einem der Ansprüche 31 bis 51, **dadurch gekennzeichnet, daß** das Verhältnis der größten Weite des Querschnitts des Formkanals zu dessen Länge zwischen 1:10 und 1:1000 beträgt.

**53.** Vorrichtung nach einem der Ansprüche 31 bis 52, **dadurch gekennzeichnet, daß** die Anzahl und die Dicke der Formplatten auf die Länge des Formkanals abgestimmt ist.

**54.** Vorrichtung nach einem der Ansprüche 31 bis 53, **dadurch gekennzeichnet, daß** die Anzahl der Formplatten umgekehrt proportional dem Verhältnis von größter lichter Weite des Querschnitts zur Länge des Formkanals ist.

**55.** Vorrichtung nach einem der Ansprüche 31 bis 54, **dadurch gekennzeichnet, daß** die Formplatten eine Dicke aufweisen, die etwa das Drei- bis Fünfzehnfache des mittleren Durchmessers des Formkanals beträgt.

**56.** Vorrichtung nach einem der Ansprüche 31 bis 55, **dadurch gekennzeichnet, daß** die Formplatten einzeln oder in Gruppen senkrecht zur Plattenebene bewegbar sind.

**57.** Vorrichtung nach einem der Ansprüche 31 bis 56, **dadurch gekennzeichnet, daß** wenigstens einige Formplatten parallel zu den benachbarten Formplatten verschiebbar sind.

**58.** Vorrichtung nach Anspruch 56 oder 57, **dadurch gekennzeichnet, daß** zum Entformen der Borsten die Formplatten einzeln oder in Gruppen zeitlich nacheinander abrückbar sind.

59. Vorrichtung nach einem der Ansprüche 56 bis 58, **dadurch gekennzeichnet, daß** beim Entformen die dem Zuführkanal zugewandte Formplatte zuletzt abrückbar ist.

60. Vorrichtung nach einem der Ansprüche 31 bis 59, **dadurch gekennzeichnet, daß** die Spritzgießform Formkanäle mit unterschiedlicher Länge und/oder mit unterschiedlichem Querschnittsverlauf aufweist.

61. Vorrichtung nach einem der Ansprüche 31 bis 60, **dadurch gekennzeichnet, daß** die Spritzgießform in einer Standardbauform zur Herstellung von Borsten einer bestimmten Länge eine darauf abgestimmte Anzahl von Formplatten aufweist und zur Variation der Bostenlänge eine darauf abgestimmte Anzahl von Formplatten ausbaubar oder einbaubar ist.

62. Vorrichtung nach einem der Ansprüche 31 bis 61, **dadurch gekennzeichnet, daß** die Spritzgießform Formkanäle mit einer Mittelachse aufweist, die unter einem gegenüber der Bewegungsrichtung der Formplatten geneig-ten Winkel verläuft und daß jede Formplatte einen Längenabschnitt des Formkanals aufweist, der so bemessen ist, daß trotz der Winkelabweichung ein Entformen durch sukzessives Abrücken der einzelnen Formplatten möglich ist.

63. Vorrichtung nach einem der Ansprüche 31 bis 62, **dadurch gekennzeichnet, daß** die Spritzgießform Formkanäle mit einer Mittelachse aufweist, die gegenüber der Bewegungsrichtung der Formplatten gekrümmt ist und daß jede Formplatte einen Längenabschnitt des Formkanals aufweist, der so bemessen ist, daß in Abhängigkeit von der Krümmung ein Entformen durch sukzessives Abheben der einzelnen Formplatten möglich ist.

64. Vorrichtung nach einem der Ansprüche 31 bis 63, **dadurch gekennzeichnet, daß** die Spritzgießform wenigstens eine Formplatte aufweist, die in ihrer Ebene gegenüber den benachbarten Formplatten verschiebbar ist und zusammen mit diesen nach dem Spritzgießen der Borsten eine auf dem entsprechenden Teil der Länge des Formkanals wirksame Klemmeinrichtung für sämtliche Borsten bildet.

65. Vorrichtung nach Anspruch 64, **dadurch gekennzeichnet, daß** die die Klemmeinrichtung bildenden Formplatten in und entgegen der Entformungsrichtung bewegbar sind.

66. Vorrichtung nach Anspruch 64 oder 65, **dadurch gekennzeichnet, daß** die die Klemmeinrichtung bildenden Formplatten zusammen mit den geklemmten Borsten nach dem Entformen aus der Spritzgießform entnehmbar sind und als Handhabe zur Ortsverlagerung der Borsten dienen.

67. Vorrichtung nach einem der Ansprüche 64 bis 66, **dadurch gekennzeichnet, daß** die die Klemmeinrichtung bildenden Formplatten nach der Entnahme durch einen Satz gleicher Formplatten zur erneuten Vervollständigung der Spritzgießform für einen weiteren Spritzgießtakt austauschbar sind.

68. Vorrichtung nach einem der Ansprüche 31 bis 67, **dadurch gekennzeichnet, daß** die Spritzgießform aus wenigstens zwei Gruppen von Formplatten mit je einer Klemmeinrichtung besteht, von denen die erste Gruppe einen Teil des Formkanals mit dessen Ende und die weiteren Gruppen den restlichen Teil des Formkanals umfassen, daß die erste Gruppe von der zweiten Gruppe und diese von den weiteren Gruppen zeitlich nacheinander abrückbar sind, und daß der Spritzgießvorgang in einer der Anzahl der Gruppen entsprechenden Anzahl von Spritzgießtakten aufgeteilt ist derart, daß in der geschlossenen Ausgangslage der Spritzgießform die Polymerschmelze in einem ersten Spritzgießtakt in den vollständigen Formkanal gespritzt wird, daraufhin die erste Gruppe von den weiteren unter Mitnahme des Spritzlings mittels der Klemmeinrichtung abrückbar ist, wobei der Abrückweg kleiner als die Länge des Spritzlings ist, anschließend in einem zweiten Spritzgießtakt weitere Polymerschmelze in den freigestellten Längenabschnitt des Formkanals der weiteren Gruppen gespritzt wird und die Schritte Spritzen/Abrücken wiederholt werden, bis die vorletzte Gruppe von der letzten Gruppe abgerückt ist, um Borsten größerer Länge als die Länge des Formkanals aus gegebenenfalls verschiedenen Polymeren zu erzeugen.

69. Vorrichtung nach einem der Ansprüche 31 bis 68, **dadurch gekennzeichnet, daß** wenigstens die die Formkontur am Ende des Formkanals aufweisende Formplatte gegen eine Formplatte mit anderer Formkontur zur Erzeugung von Borsten mit unterschiedlich geformten Enden auswechselbar ist.

70. Vorrichtung nach einem der Ansprüche 31 bis 69, **dadurch gekennzeichnet, daß** wenigstens die die Formkontur am Ende des Formkanals aufweisende Formplatte gegen eine Formplatte mit unterschiedlichen Längenabschnitten der Formkanäle auswechselbar sind.

**71.** Vorrichtung nach einem der Ansprüche 31 bis 70, **dadurch gekennzeichnet, daß** zwischen dem Zuführkanal und den Formkanälen der Spritzgießform eine zwei oder mehr Formkanäle verbindende Formkavität zur Ausbildung einer Verbindung der Borsten untereinander angeordnet ist.

**72.** Vorrichtung nach Anspruch 71, **dadurch gekennzeichnet, daß** die Formkavität zur Erzeugung eines alle Borsten verbindenden Borstenträgers ausgebildet ist.

**73.** Vorrichtung nach Anspruch 71 oder 72, **dadurch gekennzeichnet, daß** die Formkavität zur Erzeugung eines Bürsten- oder Pinselkörpers oder eines Teils desselben ausgebildet ist.

**74.** Vorrichtung nach einem der Ansprüche 71 bis 73, **dadurch gekennzeichnet, daß** die Formkavität zur Erzeugung eines Bürsten- oder Pinselkörpers oder eines. Teils desselben in einer Mehrkomponentenausführung aus unterschiedlichen Polymeren ausgebildet ist.

## Claims

**1.** Method for producing a bristle from thermoplastic polymers through injection molding, wherein the molten polymer mass is injected under pressure into a bristle-molding channel (2) of predetermined length having a predetermined cross-sectional shape along this length and the channel is vented during injection molding, wherein a shear flow is established with high core speed in the center of the molten polymer mass flow and large shearing effect due to wall friction of the molten polymer mass under distinct longitudinal orientation of the polymer molecules at least in the region of the molten polymer mass close to the watt, the channel being simultaneously vented along its length, **characterized in that** the injection pressure acting on the molten polymer mass is set, depending on the cross-sectional shape of the bristle-molding channel, to preferably at least 500 bar (0.5·$10^5$kPa) and the ratio of the largest width of the cross section of the bristle-shaped channel to the length of the channel is selected to be ≤ 1:10, wherein the longitudinal orientation of the polymer molecules is maintained along the length of the channel.

**2.** Method according to claim 1, **characterized in that** the injection pressure is set to 2000 to 5000 bar (2·$10^5$ kPa to 5·$10^5$ kPa).

**3.** Method according to any one of the claims 1 or 2, **characterized in that** the injection pressure is set such that the molten polymer mass in the bristle-molding channel has a specific pressure of more than 300 bar (0.3·$10^5$ kPa).

**4.** Method according to any one of the claims 1 through 3, **characterized in that**, with given cross-sectional shape and length of the bristle-molding channel, the injection pressure is set to support the crystal seed formation between neighboring longitudinally oriented molecular sections.

**5.** Method according to any one of the claims 1 through 4, **characterized in that** the bristle-molding channel is cooled.

**6.** Method according to any one of the claims 1 through 5, **characterized in that** the bristle-molding channel is vented transverse to the flow direction of the molten polymer mass.

**7.** Method according to claim 6, **characterized in that** the bristle-molding channel is vented in several planes disposed transverse to the flow direction of the molten polymer mass.

**8.** Method according to claim 7, **characterized in that** the bristle-molding channel is vented along its length via planes disposed at approximately equal distances.

**9.** Method according to any one of the claims 1 through 8, **characterized in that** the bristle-molding channel is vented of air displaced by flow pressure of the molten polymer mass.

**10.** Method according to any one of the claims 1 through 9, **characterized in that** the channel is vented with the support of an external underpressure.

**11.** Method according to any one of the claims 1 through 10,

**characterized in that** the molten polymer mass is injected into a bristle-molding channel with a cross-section which remains substantially the same, beginning at the injection side.

12. Method according to any one of the claims 1 through 11, **characterized in that** the molten polymer mass is injected into a bristle-molding channel having a cross-section which tapers substantially continuously from the injection side.

13. Method according to any one of the claims 1 through 12, **characterized in that** the molten polymer mass is injected into an inlet region which narrows like a nozzle towards the bristle-molding channel for producing an extension flow.

14. Method according to any one of the claims 1 through 13, **characterized in that** the molten polymer mass is injected into a bristle-molding channel whose cross-sectional shape has at least one discontinuity in the form of a tapering in the flow direction of the molten polymer mass.

15. Method according to any one of the claims 1 through 14, **characterized in that** the cross-section of the bristle-molding channel is selected to have a maximum width of ≤ 3mm.

16. Method according to one of the claims 1 through 15, **characterized in that** the ratio of the largest width to the length of the channel is selected to be ≤ 1:250.

17. Method according to any one of the claims 1 through 16, **characterized in that** the molten polymer mass is simultaneously injected into several neighboring bristle-molding channels thereby forming a corresponding number of bristles.

18. Method according to claim 17, **characterized in that** the molten polymer mass is injected into the neighboring bristle-molding channels thereby simultaneously forming a connection between at least two bristles.

19. Method according to claim 17, **characterized in that** after injection of the bristles, a molten polymer mass of another polymer is subsequently injected, thereby forming a connection between at least two bristles.

20. Method according to any one of the claims 17 through 19, **characterized in that** the molten polymer mass is injected to form a bristle support which connects at least two or more bristles.

21. Method according to claims 18 to 20, **characterized in that** the molten polymer mass is injected to form a bristle support which connects the bristles and forms the brush body.

22. Method according to claim 20, **characterized in that** at least one further molten polymer mass from another polymer is injected onto the bristle support.

23. Method according to any one of the claims 17 through 22, **characterized in that** a number of bristles are injected with different lengths.

24. Method according to any one of the claims 17 through 23, **characterized in that** a number of bristles are injected with different cross-sections.

25. Method according to any one of the claims 17 through 24, **characterized in that** a number of bristles are injected with a cross-sectional shape, which changes along their lengths.

26. Method according to any one of the claims 17 through 25, **characterized in that** a plurality of bristles are injected-with parallel mutual orientation.

27. Method according to any one of the claims 17 through 25, **characterized in that** at least one part of the bristles is injected in a non-parallel fashion.

28. Method according to any one of the claims 17 through 27, **characterized in that** bristles of a same geometry but different bending elasticity (hardness) are produced through injection-molding of different molten polymer masses in the same molding channels.

29. Method according to any one of the claims 1 through 28, **characterized in that** the bristles are injected from a polymer or a polymer mixture, which has reduced secondary binding forces in the solidified state.

30. Method according to any one of the claims 1 through 29, **characterized in that** the bristles are injected from a polymer including additives, which become active during use.

31. Device for injection molding of bristles from thermoplastic polymers, comprising a means for producing an injection pressure and an injection mold (1) which has at least one supply channel (3) for the molten polymer mass and at least one cavity in the form of a molding channel (2) having a mold contour corresponding to the length and the cross-sectional shape of the bristle (9) to be produced, wherein the molding channel (2) has an associated venting means for release of the air displaced during injection molding, the venting means having venting cross-sections (3) distributed along the length of the molding channel, **characterized in that** the injection pressure means is designed for generating an injection pressure of at least 500 bar ($0.5 \cdot 10^5$ kPa) and the ratio of the largest width of the molding channel (2) cross section to its length $\leq 1 : 10$, such that a shear flow can be established with high core speed in the center of the molten polymer mass and large shearing effect at the wall of the molding channel.

32. Device according to claim 31, **characterized in that** the means for generating the injection pressure is designed such that injection pressures of between 2000 and 5000 bar ($2 \cdot 10^5$ kPa to $5 \cdot 10^5$ kPa) can be set depending on the length and cross-sectional shape of the molding channel.

33. Device according to claim 31 or 32, **characterized in that** the means for generating an injection pressure and the venting cross-sections on the molding channel are designed such that the molten polymer mass in the molding channel has a specific pressure of at least 300 bar ($0.3 \cdot 10^5$ kPa).

34. Device according to any one of the claims 31 through 33, **characterized in that** the injection pressure can be controlled depending on the length and the cross-sectional shape of the molding channel.

35. Device according to any one of the claims 31 through 34, **characterized in that** the venting means have venting cross-sections, which can be controlled depending on the specific pressure.

36. Device according to any one of the claims 31 through 35, **characterized in that** the injection mold with molding channel has an associated coolant.

37. Device according to claim 36, **characterized in that** the molding channel in the injection mold has an associated coolant.

38. Device according to any one of the claims 31 through 37, **characterized in that** the injection mold consists of several molding plates which are layered transverse to the longitudinal extension of the molding channel, each defining a longitudinal section of the molding channel.

39. Device according to claim 38, **characterized in that** the venting means are formed on the molding plates.

40. Device according to claim 39, **characterized in that** the venting means are formed between the mutually facing support surfaces of the molding plates.

41. Device according to claim 40, **characterized in that** the venting means are formed through gaps between the mutually facing surfaces of the molding plates.

42. Device according to claim 40, **characterized in that** the venting means are formed by surface roughnesses on the surfaces of the molding plates.

43. Device according to any one of the claims 31 through 42, **characterized in that** the venting means have venting cross-sections with a width of between 5μm and 300μm at the mold surface of the molding channel.

44. Device according to any one of the claims 31 through 43, **characterized in that** the venting means have venting cross-sections, which widen outwardly, starting from the mold surface of the molding channel.

45. Device according to any one of the claims 31 through 44, **characterized in that** the venting means are connected to an external underpressure source.

46. Device according to any one of the claims 31 through 45, **characterized in that** the molding channel has a cross-section, which remains substantially constant along its length.

47. Device according to any one of the claims 31 through 45, **characterized in that** the molding channel has a cross-section, which tapers substantially uniformly towards its end.

48. Device according to claim 47, **characterized in that** the molding channel has a linear axis and tapers with an angle of less than 1.0 degrees (mold slope).

49. Device according to any one of the claims 31 through 48, **characterized in that** the molding channel has a cross-section, which tapers discontinuously towards the end.

50. Device according to any one of the claims 31 through 49, **characterized in that** the largest width of the cross-section of the molding channel is ≤ 3mm.

51. Device according to any one of the claims 31 through 50, **characterized in that** at least one injection-side molding plate, having a widening which narrows towards the molding channel, is connected to the molding channel upstream of the molding channel at a side facing the supply channel.

52. Device according to any one of the claims 31 through 51, **characterized in that** the ratio of the largest width of the cross-section of the molding channel to its length is between 1:10 and 1:1000.

53. Device according to any one of the claims 31 through 52, **characterized in that** the number and thickness of the molding plates is matched to the length of the molding channel.

54. Device according to any one of the claims 31 through 53, **characterized in that** the number of molding plates is inversely proportional to the ratio of the largest inside diameter of the cross-section to the length of the molding channel.

55. Device according to any one of the claims 31 through 54, **characterized in that** the molding plates have a thickness, which is approximately three.to fifteen times the average diameter of the molding channel.

56. Device according to any one of the claims 31 through 55, **characterized in that** the molding plates can be moved perpendicular to the plane of the plate, either individually or in groups.

57. Device according to any one of the claims 31 through 56, **characterized in that** at least some molding plates can be displaced parallel to the neighboring molding plates..

58. Device according to claim 56 or 57, **characterized in that** the molding plates can be sequentially removed, individually or in groups.

59. Device according to any one of the claims 56 through 58, **characterized in that** during release from the mold, the molding plate facing the supply channel can be removed last.

60. Device according to any one of the claims 31 through 59, **characterized in that** the injection mold has molding channels of different lengths and/or different cross-sectional shapes.

61. Device according to any one of the claims 31 through 60, **characterized in that** a standard structure of the injection mold for producing bristles of a given length has a number of molding plates standardized thereto and a standardized number of molding plates can be removed or inserted to vary the bristle length.

62. Device according to any one of the claims 31 through 61, **characterized in that** the injection mold has molding channels with a central axis which extends at an angle which is inclined relative to the direction of motion of the molding plates and each molding plate has a longitudinal section of the molding channel which is dimensioned such that release from the mold is possible through successive removal of the individual molding plates, despite the angular deflection.

63. Device according to any one of the claims 31 through 62, **characterized in that** the injection mold comprises molding channels with a central axis which is curved relative to the direction of motion of the molding plates and each molding plate has a longitudinal section of the molding channel which is dimensioned such that release from the mold is possible through successive lifting of the individual molding plates, in dependence on the curvature.

64. Device according to any one of the claims 31 through 63, **characterized in that** the injection mold has at least one molding plate which can be displaced in its plane relative to the neighboring molding plates to form, after injection molding of the bristles, a clamping means for all bristles which acts on the corresponding part of the length of the molding channel.

65. Device according to claim 64, **characterized in that** the molding plates forming the clamping means can be moved in the removing direction and opposite thereto.

66. Device according to claim 64 or 65, **characterized in that** the molding plates forming the clamping means can be moved together with the clamped bristles after removal from the injection mold for handling spatial displacement of the bristles.

67. Device according to any one of the claims 64 through 66, **characterized in that** the molding plates forming the clamping means can be removed and replaced by a set of identical molding plates for renewed completion of the injection mold in a further injection cycle.

68. Device according to any one of the claims 31 through 67, **characterized in that** the injection mold consists of at least two groups of molding plates each having one clamping means, of which the first group comprises a part of the molding channel including the end and the other groups form the remaining part of the molding channel, wherein the first group can be subsequently removed from the second group and the second group from the further groups, with the injection process being divided into a number of injection molding cycles corresponding to the number of groups such that, in the closed initial position of the injection mold, the molten polymer mass is injected in a first injection molding cycle into the complete molding channel, whereupon the first group can be removed from the others thereby carrying along the blank via the clamping means, with the withdrawal path being shorter than the length of the blank, and additional molten polymer mass is subsequently injected into the freed longitudinal section of the molding channel in the further groups during a second injection molding cycle, and the steps injection/removal are repeated until the penultimate group is removed from the last group, to produce bristles of a greater length than the length of the molding channel, optionally from different polymers.

69. Device according to any one of the claims 31 through 68, **characterized in that** at least the molding plate defining the mold contour at the end of the molding channel can be replaced by a molding plate having another mold contour for generating bristles with ends having different shapes.

70. Device according to any one of the claims 31 through 69, **characterized in that** at least the molding plate having the mold contour at the end of the molding channel can be replaced by a molding plate with different longitudinal sections of the molding channels.

71. Device according to any one of the claims 31 through 70, **characterized in that** a mold cavity connecting two or more molding channels is disposed between the supply channel and the molding channels of the injection mold for forming a connection among the bristles.

72. Device according to claim 71, **characterized in that** the mold cavity is structured to produce a bristle support connecting all bristles.

73. Device according to claim 71 or 72, **characterized in that** the mold cavity is designed to produce a brush or paint brush body or part thereof.

74. Device according to any one of the claims 71 through 73, **characterized in that** the mold cavity is designed for generating a brush or paintbrush body or part thereof in a multiple component structure of different polymers.

**Revendications**

1. Procédé de fabrication d'une brosse en polymères thermoplastiques par moulage par injection, dans lequel la masse fondue de polymère est injectée sous pression dans un canal (2) de conformation des poils d'une longueur prédéterminée et d'une forme de section transversale prédéterminée à la valeur de cette longueur, et dans lequel le canal (2) est désaéré pendant le processus de moulage par injection, sachant qu'un écoulement de cisaillement à haute vitesse centrale au centre de la masse fondue de polymère en écoulement et à plus grand effet de cisaillement du fait de la friction sur les parois par la masse fondue de polymère s'établit et présente une orientation longitudinale accentuée des molécules de polymères, au moins dans la zone, proche de la paroi, de la masse fondue de polymère et, dans lequel on désaère le canal sur sa longueur, **caractérisé en ce que** la pression d'injection agissant sur la masse fondue de polymère est réglée en fonction de la forme de la section transversale du canal conformant les poils, à une valeur de préférence d'au moins 500 bar (0,5·10$^5$ kPa), et **en ce que** le rapport, entre la largeur maximale de la section transversale du canal conformant les poils et la longueur du canal est choisi à ≤ 1 :10, de manière que l'orientation longitudinale des molécules de polymères sur la longueur du canal soit conservée.

2. Procédé selon la revendication 1, **caractérisé en ce que** la pression d'injection est réglée à 2000 à 5000 bar (2.10$^5$ kPa à 5·10$^5$ kPa).

3. Procédé selon la revendication 1 ou 2, **caractérisé en ce que** la pression d'injection est réglée de manière que la masse fondue de polymère dans le canal conformant le poil ait une pression spécifique supérieure 300 bar (0,3·10$^5$ kPa).

4. Procédé selon l'une des revendications 1 à 3, **caractérisé en ce que**, pour une forme de section transversale donnée et une longueur donnée du canal conformant le poil, la pression d'injection est réglée de manière que la formation d'un germe cristallin, entre des tronçons voisins de molécule, orientés longitudinalement, soit favorisée.

5. Procédé selon l'une des revendications 1 à 4, **caractérisé en ce que** le canal conformant le poil est refroidi.

6. Procédé selon l'une des revendications 1 à 5, **caractérisé en ce que** le canal conformant le poil est désaéré transversalement par rapport à la direction d'écoulement de la masse fondue de polymère.

7. Procédé selon la revendication 6, **caractérisé en ce que** le canal conformant le poil est désaéré selon plusieurs plans orientés transversalement à la direction d'écoulement de la masse fondue de polymère.

8. Procédé selon la revendication 7, **caractérisé en ce que** le canal conformant le poil est désaéré sur sa longueur, sur des plans disposés à peu près au même espacement.

9. Procédé selon l'une des revendications 1 à 8, **caractérisé en ce que** le canal conformant le poil est désaéré par refoulement de l'air, en utilisant la pression d'écoulement de la masse fondue de polymère.

10. Procédé selon l'une des revendications 1 à 9, **caractérisé en ce que** le canal est désaéré par l'assistance d'une pression négative extérieure.

11. Procédé selon l'une des revendications 1 à 10, **caractérisé en ce que** la masse fondue de polymère est injectée dans un canal conformant le poil, ayant une section transversale pratiquement constante depuis le côté injection.

12. Procédé selon l'une des revendications 1 à 11, **caractérisé en ce que** la masse fondue de polymère est injectée dans un canal conformant le poil de section transversale allant en s'effilant, de façon sensiblement continue, en partant du point d'injection.

13. Procédé selon l'une des revendications 1 à 12, **caractérisé en ce que** la masse fondue de polymère est injectée dans une zone d'entrée, allant en rétrécissant à la façon d'une buse en évoluant vers le canal conformant le poil, afin de produire un écoulement accompagné d'étirements.

14. Procédé selon l'une des revendications 1 à 13, **caractérisé en ce que** la masse fondue de polymère est injectée dans un canal conformant le poil, dont la forme de section transversale présente au moins une discontinuité en forme d'effilement dans la direction d'écoulement de la masse fondue de polymère.

15. Procédé selon l'une des revendications 1 à 14, **caractérisé en ce que** la section transversale du canal conformant le poil est choisie pour avoir une largeur maximale ≤ 3 mm.

**16.** Procédé selon l'une des revendications 1 à 15, **caractérisé en ce que** le rapport, entre la largeur maximale et la longueur du canal, est choisie pour avoir une valeur ≤ 1 :250.

**17.** Procédé selon l'une des revendications 1 à 16, **caractérisé en ce que** la masse fondue de polymère est simultanément injectée en plusieurs canaux conformant les poils, disposés au voisinage les uns des autres, en formant un nombre correspondant de poils.

**18.** Procédé selon la revendication 17, **caractérisé en ce que** la masse fondue de polymère est injectée avec formation simultanée d'une liaison entre au moins deux poils, dans les canaux conformant les poils, disposés adjacents les uns des autres.

**19.** Procédé selon la revendication 17, **caractérisé en ce que**, après injection des poils, est effectuée une post-injection de la masse fondue de polymère, depuis un autre polymère, en formant une liaison entre au moins deux poils.

**20.** Procédé selon l'une des revendications 17 à 19, **caractérisé en ce que** la masse fondue de polymère est injectée en formant au moins un support de poils reliant deux poils ou plus.

**21.** Procédé selon la revendication 18 à 20, **caractérisé en ce que** la masse fondue de polymère est injectée pour former un support de poils reliant les poils et pour former un corps de brosse.

**22.** Procédé selon la revendication 20, **caractérisé en ce que**, au moins une autre masse fondue de polymère, issue d'un autre polymère, est injectée en enrobage sur le support de poils.

**23.** Procédé selon l'une des revendications 17 à 22, **caractérisé en ce que** les nombreux poils sont injectés selon des longueurs différentes.

**24.** Procédé selon l'une des revendications 17 à 23, **caractérisé en ce que** les nombreux poils sont injectés selon des sections transversales différentes.

**25.** Procédé selon l'une des revendications 17 à 24, **caractérisé en ce que** les nombreux poils sont injectés selon une forme de section transversale variable en fonction de la longueur.

**26.** Procédé selon l'une des revendications 17 à 25, **caractérisé en ce que** les nombreux poils sont injectés sous une orientation mutuellement parallèle.

**27.** Procédé selon l'une des revendications 17 à 25, **caractérisé en ce qu'**au moins une partie des poils est injectée dans une position non parallèle.

**28.** Procédé selon l'une des revendications 17 à 27, **caractérisé en ce que** des poils, de même géométrie mais ayant une élasticité en flexion (dureté) différente, sont produits par moulage par injection de polymères de masses fondues différentes, dans les mêmes canaux de formage.

**29.** Procédé selon l'une des revendications 1 à 28, **caractérisé en ce que** les poils, issus d'un polymère ou d'un mélange de polymères, sont injectés et présentent, à l'état solidifié, des forces secondaires de liaison réduites.

**30.** Procédé selon l'une des revendications 1 à 29, **caractérisé en ce que** les poils réalisés en un polymère sont injectés avec des additifs devenant actifs au moment de l'utilisation.

**31.** Dispositif de moulage par injection de poils à partir de polymères thermoplastiques, comprenant un dispositif pour produire la pression d'injection et un moule de moulage par injection (1), présentant au moins un canal d'amenée (3) pour la masse fondue de polymère et au moins une cavité conformée en un canal de formage (2) ayant un contour de formage correspondant à la longueur et à la forme de section transversale des poils (9) à fabriquer, sachant qu'au canal de formage (2) sont associés des moyens de désaération devant évacuer l'air refoulé au moment du moulage par injection, moyens de désaération présentant des sections transversales de désaération (13) disposées de façon répartie sur la longueur du canal de formage, **caractérisé en ce que** le dispositif est conçu pour produire une pression d'injection d'au moins 500 bar ($0,5 \cdot 10^5$ kPa) et le rapport, entre la largeur maximale de la section transversale du canal de formage (2) et sa longueur, est ≤ 1 :10, de manière à pouvoir réaliser un écoulement accompagné de cisaillement, à haute vitesse centrale au centre de la masse fondue de polymère et un grand effet de cisaillement sur la paroi du canal de formage.

**32.** Dispositif selon la revendication 31, **caractérisé en ce que** le dispositif de production de pression d'injection est conçu de manière que des pressions d'injection, comprises entre 2000 et 5000 bar (2·10$^5$ kPa à 5·10$^5$ kPa), puissent être réglées en fonction de la longueur et de l'allure de section transversale du canal de formage.

**33.** Dispositif selon la revendication 31 ou 32, **caractérisé en ce que** le dispositif de production de la pression d'injection et les sections transversales de désaération du canal de formage sont conçus de manière que la masse fondue de polymère présente, dans le canal de formage, une pression spécifique d'au moins 300 bar (0,3·10$^5$ kPa).

**34.** Dispositif selon l'une des revendications 31 à 33, **caractérisé en ce que** la pression d'injection peut être commandée en fonction de la longueur et de la forme de la section transversale du canal de formage.

**35.** Dispositif selon l'une des revendications 31 à 34, **caractérisé en ce que** les moyens de désaération présentent des sections transversales de désaération pouvant être commandées en fonction de la pression spécifique.

**36.** Dispositif selon l'une des revendications 31 à 35, **caractérisé en ce que** des moyens de refroidissement sont associés au moule de moulage par injection présentant le canal de formage.

**37.** Dispositif selon la revendication 36, **caractérisé en ce que** des moyens de refroidissement sont associés au canal de formage, dans le moule de moulage par injection.

**38.** Dispositif selon l'une des revendications 31 à 37, **caractérisé en ce que** le moule de moulage par injection est formé d'une pluralité de plaques de formage, empilées transversalement par rapport à l'étendue longitudinale du canal de formage, plaques dont chacune présente un tronçon de longueur du canal de formage.

**39.** Dispositif selon la revendication 38, **caractérisé en ce que** les moyens de désaération sont réalisés sur les plaques de formage.

**40.** Dispositif selon la revendication 39, **caractérisé en ce que** les moyens de désaération sont réalisés entre les faces de pose, tournées les unes vers les autres, des plaques de formage.

**41.** Dispositif selon la revendication 40, **caractérisé en ce que** les moyens de désaération sont constitués par les intervalles existant entre les faces, tournées les unes vers les autres, des plaques de formage.

**42.** Dispositif selon la revendication 40, **caractérisé en ce que** les moyens de désaération sont formés par des rugosités de surface, réalisées sur les surfaces des plaques de formage.

**43.** Dispositif selon l'une des revendications 31 à 42, **caractérisé en ce que** les moyens de désaération réalisés sur le contour de formage du canal de formage présentent des sections transversales de désaération d'une largeur de 5 μm à 300 μm.

**44.** Dispositif selon l'une des revendications 31 à 43, **caractérisé en ce que** les moyens de désaération présentent des sections transversales de désaération, allant en s'élargissant vers l'extérieur, en partant du contour de formage du canal de formage.

**45.** Dispositif selon l'une des revendications 31 à 44, **caractérisé en ce que** les moyens de désaération sont reliés à une source de vide externe.

**46.** Dispositif selon l'une des revendications 31 à 45, **caractérisé en ce que** le canal de formage présente une section transversale pratiquement constante sur sa longueur.

**47.** Dispositif selon l'une des revendications 31 à 45, **caractérisé en ce que** le canal de formage présente une section transversale allant en s'effilant de façon pratiquement continue en allant vers son extrémité.

**48.** Dispositif selon la revendication 47, **caractérisé en ce que** le canal de formage va en s'effilant, dans le cas d'un axe linéaire, selon un angle inférieur à 1,0 degré (dépouille de moulage).

**49.** Dispositif selon l'une des revendications 31 à 48, **caractérisé en ce que** le canal de formage présente une section transversale allant en s'effilant de façon discontinue vers l'extrémité.

**50.** Dispositif selon l'une des revendications 31 à 49, **caractérisé en ce que** la largeur maximale de la section transversale du canal de formage est ≤ 3 mm.

**51.** Dispositif selon l'une des revendications 31 à 50, **caractérisé en ce que**, en amont de l'ensemble constitué par des plaques de formage et le canal de formage, sur sa face tournée vers le canal d'amenée, est prévue au moins une plaque de formage située côté arrivée de l'injection, avec un élargissement allant en se rétrécissant vers le canal de formage.

**52.** Dispositif selon l'une des revendications 31 à 51, **caractérisé en ce que** le rapport entre la largeur maximale de la section transversale du canal de formage et sa longueur est compris entre 1 :10 et 1 :1000.

**53.** Dispositif selon l'une des revendications 31 à 52, **caractérisé en ce que** le nombre et l'épaisseur des plaques de formage sont adaptés à la longueur du canal de formage.

**54.** Dispositif selon l'une des revendications 31 à 53, **caractérisé en ce que** le nombre de plaques de formage est inversement proportionnel au rapport entre la largeur libre maximale de la section transversale et la longueur du canal de formage.

**55.** Dispositif selon l'une des revendications 31 à 54, **caractérisé en ce que** les plaques de formage présentent une épaisseur à peu près de trois à quinze fois le diamètre moyen du canal de formage.

**56.** Dispositif selon l'une des revendications 31 à 55, **caractérisé en ce que** les plaques de formage sont déplaçables individuellement ou en groupes, perpendiculairement au plan des plaques.

**57.** Dispositif selon l'une des revendications 31 à 56, **caractérisé en ce qu'**au moins quelques plaques de formage sont déplaçables parallèlement aux plaques de formage voisines.

**58.** Dispositif selon la revendication 56 ou 57, **caractérisé en ce que** les plaques de formage peuvent être rétractées les unes après les autres, individuellement ou en groupes, pour effectuer le démoulage des poils.

**59.** Dispositif selon l'une des revendications 56 à 58, **caractérisé en ce que**, lors du démoulage, la plaque de formage tournée vers le canal d'amenée est celle qui est rétractée en dernier.

**60.** Dispositif selon l'une des revendications 31 à 59, **caractérisé en ce que** le moule de moulage par injection présente des canaux de formage ayant une longueur différente et/ou ayant une forme de section transversale différente.

**61.** Dispositif selon l'une des revendications 31 à 60, **caractérisé en ce que** le moule de moulage par injection présente, dans une version standard pour la production de poils d'une longueur déterminée, un nombre adapté de plaques de formage et, pour obtenir une modification de la longueur des poils, un nombre adapté de plaques de formage interchangeables ou mis en place.

**62.** Dispositif selon l'une des revendications 31 à 61, **caractérisé en ce que** le moule de moulage par injection présente des canaux de formage ayant un axe central s'étendant sous un angle d'inclinaison par rapport à la direction de déplacement des plaques de formage, et **en ce que** chaque plaque de formage présente un tronçon de longueur du canal de formage, de valeur telle que, malgré l'écart angulaire, on puisse effectuer un démoulage par rétraction successive des différentes plaques de formage.

**63.** Dispositif selon l'une des revendications 31 à 62, **caractérisé en ce que** les canaux de formage du moule de moulage par injection présentent un axe central incurvé par rapport à la direction de déplacement des plaques de formage, et **en ce que** chaque plaque de formage présente un tronçon longitudinal du canal de formage, de dimension telle que, en fonction de la courbure, on puisse effectuer un démoulage par un dégagement successif des différentes plaques de formage.

**64.** Dispositif selon l'une des revendications 31 à 63, **caractérisé en ce que** le moule de moulage par injection présente au moins une plaque de formage, déplaçable dans son plan par rapport aux plaques de formage voisines, et forme, après le moulage par injection des poils, conjointement avec celles-ci pour l'ensemble des poils, un dispositif de serrage agissant sur la partie correspondante de la longueur du canal de formage.

65. Dispositif selon la revendication 64, **caractérisé en ce que** les plaques de formage formant le dispositif de serrage sont déplaçables dans le sens du démoulage et dans le sens inverse.

66. Dispositif selon la revendication 64 ou 65, **caractérisé en ce que** les plaques de formage formant le dispositif de serrage, conjointement avec les poils serrés après le démoulage, sont extractibles du moule de moulage par injection et servent d'organes de manipulation pour le déplacement local des poils.

67. Dispositif selon l'une des revendications 64 à 66, **caractérisé en ce que** les plaques de formage formant le dispositif de serrage, après prélèvement, sont susceptibles être remplacées par un jeu de plaques de formage identiques, pour renouveler un moule complet de moulage par injection, pour un autre cycle de moulage par injection.

68. Dispositif selon l'une des revendications 31 à 67, **caractérisé en ce que** le moule de moulage par injection est formé d'au moins deux groupes de plaques de formage ayant chacun un dispositif de serrage, dont le premier groupe comprend une partie du canal de formage avec son extrémité et les autres groupes comprennent la partie restante du canal de formage, **en ce que** le premier groupe peut être rétracté du deuxième groupe et celui-ci peut être rétracté des autres groupes, les rétractions se faisant les unes après les autres, et un seul processus de moulage par injection est divisé en un nombre de cycles de moulage par injection qui correspond au nombre de groupes, de manière que, à la position initiale fermée du moule de moulage par injection, la masse fondue de polymère soit injectée au cours d'un premier cycle de moulage par injection, dans le canal de moulage complet, qu'ensuite le premier groupe puisse être rétracté des autres, en entraînant l'ébauche d'injection, à l'aide du dispositif de serrage, sachant que la course de rétractation est inférieure à la longueur de l'ébauche d'injection, qu'ensuite, au cours d'un deuxième cycle de moulage par injection, une masse de polymère supplémentaire est injectée dans le tronçon de longueur dégagé, du canal de formage des autres groupes, et les étapes d'injection/rétraction sont répétées jusqu'à ce que l'avant dernier groupe soit rétracté du dernier groupe, pour produire des poils de plus grande longueur que la longueur du canal de formage, poils formés de polymères, le cas échéant différents.

69. Dispositif selon l'une des revendications 31 à 68, **caractérisé en ce qu'**au moins la plaque de formage, présentant le contour de formage à l'extrémité du canal de formage, est susceptible d'être remplacée pour une plaque de formage ayant un autre contour de formage, pour produire des poils ayant des extrémités de forme différentes.

70. Dispositif selon l'une des revendications 31 à 69, **caractérisé en ce qu'**au moins la plaque de formage, présentant le contour de formage à l'extrémité du canal de formage, peut être remplacée par une plaque de formage ayant des canaux de formage dont les tronçons de longueur sont différents.

71. Dispositif selon l'une des revendications 31 à 70, **caractérisé en ce que**, entre le canal d'amenée et les canaux de formage du moule de moulage par injection, est disposée une cavité de formage, reliant deux canaux de formage ou plus, pour former une liaison entre les poils.

72. Dispositif selon la revendication 71, **caractérisé en ce que** la cavité de formage est prévue pour produire un support de poils reliant tous les poils.

73. Dispositif selon la revendication 71 ou 72, **caractérisé en ce que** la cavité de formage est prévue pour produire un corps de brosse ou de pinceau, ou bien une partie de celui-ci.

74. Dispositif selon l'une des revendications 71 à 73, **caractérisé en ce que** la cavité de formage est prévue pour produire un corps de brosse ou de pinceau, ou une partie de celui-ci, à plusieurs composants, composée de polymères différents.

*Fig. 1*

Fig.5    Fig.2    Fig.3    Fig.4

Fig.6

Fig.7

Fig.8

Fig.9

*Fig.10*

*Fig.11*

*Fig.12*

Fig. 13

Fig.14

Fig.15

Fig.16

Fig.17

Fig.18

Fig.19

Fig.20

Fig.21

Fig.22

Fig.23

Fig.24

Fig.25

Fig.26

Fig.27

Fig.28

Fig.29

Fig.30

Fig.31

Fig.32

56

53

54

55

Fig.33

Fig.34

66

64

65    65

60

63

61

*Fig.35*

62

64

*Fig.36*

45